(19) Europäisches Patentamt / European Patent Office / Office européen des brevets

(11) EP 2 606 319 B1

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(51) Int Cl.:
*G01F 1/74* *(2006.01)*     *G01F 1/84* *(2006.01)*

(21) Anmeldenummer: **11741149.6**

(22) Anmeldetag: **11.07.2011**

(86) Internationale Anmeldenummer:
**PCT/EP2011/061723**

(87) Internationale Veröffentlichungsnummer:
**WO 2012/022541 (23.02.2012 Gazette 2012/08)**

(54) **MEßSYSTEM MIT EINEM MEßWANDLER VOM VIBRATIONSTYP**

MEASURING SYSTEM WITH A MEASURING TRANSDUCER OF A VIBRATION TYPE

SYSTÈME DE MESURE PRÉSENTANT UN TRANSDUCTEUR DE TYPE VIBRATOIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2010 DE 102010039543**

(43) Veröffentlichungstag der Anmeldung:
**26.06.2013 Patentblatt 2013/26**

(73) Patentinhaber: **Endress+Hauser Flowtec AG**
**4153 Reinach (CH)**

(72) Erfinder:
• **ZHU, Hao**
  **85354 Freising (DE)**
• **DRAHM, Wolfgang**
  **85435 Erding (DE)**
• **RIEDER, Alfred**
  **84032 Landshut (DE)**
• **KUMAR, Vivek**
  **CH-4123 Allchwill (CH)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A1- 0 462 711     WO-A1-2009/089839**
**WO-A1-2010/091700     US-A1- 2008 011 101**

• **GOEKE J ET AL: "Neue Parameter zur Analyse der Stoerungen eines Coriolis-Massemessers", TECHNISCHES MESSEN TM, R.OLDENBOURG VERLAG. MUNCHEN, DE, Bd. 74, Nr. 11, 1. Januar 2007 (2007-01-01), Seiten 577-588, XP008114101, ISSN: 0171-8096, DOI: 10.1524/TEME.2007.74.11.577**

## Beschreibung

Die Erfindung betrifft ein, insb. als ein Kompakt-Meßgerät und/oder ein Coriolis-Massedurchfluß-Meßgerät ausgebildetes, Meßsystem für Fluide, das einen im Betrieb zumindest zeitweise von Fluid durchströmten, von wenigstens einer das strömende Fluid charakterisierenden Meßgröße, insb. einem Massendurchfluß, einer Dichte, einer Viskosität etc., beeinflußte Schwingungssignale generierenden Meßwandler vom Vibrationstyp sowie eine mit dem Meßwandler elektrisch gekoppelte und vom Meßwandler gelieferte Schwingungssignale zu Meßwerten verarbeitende Umformer-Elektronik umfaßt.

In der industriellen Meßtechnik werden, insb. auch im Zusammenhang mit der Regelung und Überwachung von automatisierten verfahrenstechnischen Prozessen, zur Ermittlung von charakteristischen Meßgrößen von in einer Prozeßleitung, beispielsweise einer Rohrleitung, strömenden Fluiden, beispielsweise von Flüssigkeiten und/oder Gasen, oftmals solche Meßsysteme verwendet, die mittels eines Meßwandlers vom Vibrationstyp und einer daran angeschlossenen, zumeist in einem separaten Elektronik-Gehäuse untergebrachten, Umformer-Elektronik, im strömenden Fluid Reaktionskräfte, beispielsweise Corioliskräfte, induzieren und von diesen abgeleitet wiederkehren die wenigstens eine Meßgröße, beispielsweise eine Massedurchflußrate, einer Dichte, einer Viskosität oder einem anderen Prozeßparameter, entsprechend repräsentierende Meßwerte erzeugen. Derartige - oftmals mittels eines In-Line-Meßgeräts in Kompaktbauweise mit integriertem Meßwandler, wie etwa einem Coriolis-Massedurchflußmesser, gebildete - Meßsysteme sind seit langem bekannt und haben sich im industriellen Einsatz bewährt. Beispiele für solche Meßsysteme mit einem Meßwandler vom Vibrationstyp oder auch einzelnen Komponenten davon, sind z.B. in der EP-A 317 340, der JP-A 8-136311, der JP-A 9-015015, der US-A 2007/0119264, der US-A 2007/0119265, der US-A 2007/0151370, der US-A 2007/0151371, der US-A 2007/0186685, der US-A 2008/0034893, der US-A 2008/0141789, US-A 46 80 974, der US-A 47 38 144, der US-A 47 77 833, der US-A 48 01 897, der US-A 48 23 614, der US-A 48 79 911, der US-A 50 09 109, der US-A 50 24 104, der US-A 50 50 439, der US-A 52 91 792, der US-A 53 59 881, der US-A 53 98 554, der US-A 54 76 013, der US-A 55 31 126, der US-A 56 02 345, der US-A 56 91 485, der US-A 57 34 112, der US-A 57 96 010, der US-A 57 96 011, der US-A 57 96 012, der US-A 58 04 741, der US-A 58 61 561, der US-A 58 69 770, der US-A 59 45 609, der US-A 59 79 246, der US-A 60 47 457, der US-A 60 92 429, der US-A 6073495, der US-A 63 111 36, der US-B 62 23 605, der US-B 63 30 832, der US-B 63 97 685, der US-B 65 13 393, der US-B 65 57 422, der US-B 66 51 513, der US-B 66 66 098, der US-B 66 91 583, der US-B 68 40 109, der US-B 68 68 740, der US-B 68 83 387, der US-B 70 17 424, der US-B 70 40 179, der US-B 70 73 396, der US-B 70 77 014, der US-B 70 80 564, der US-B 71 34 348, der US-B 72 16 550, der US-B 72 99 699, der US-B 73 05 892, der US-B 73 60 451, der US-B 73 92 709, der US-B 74 06 878, der WO-A 00/14 485, der WO-A 01/02 816, der WO-A 2004/072588, der WO-A 2008/013545, der WO-A 2008/07 7574, der WO-A 95/29386, der WO-A 95/16897 oder der WO-A 99 40 394 beschrieben. Jeder der darin gezeigten Meßwandler umfaßt wenigstens ein in einem Meßwandler-Gehäuse untergebrachtes, im wesentlichen gerades oder gekrümmtes Meßrohr zum Führen des, gegebenenfalls auch extrem schnell oder extrem langsam strömenden, Fluids. Im Betrieb des Meßsystems wird das wenigstens ein Meßrohr zwecks Generierung von durch das hindurchströmende Fluid mit beeinflußten Schwingungsformen vibrieren gelassen.

Bei Meßwandlern mit zwei Meßrohren sind diese zumeist über ein sich zwischen den Meßrohren und einem einlaßseitigen Anschlußflansch erstreckenden einlaßseitig Strömungsteiler sowie über ein sich zwischen den Meßrohren und einem auslaßseitigen Anschlußflansch erstreckenden auslaßseitig Strömungsteiler in die Prozeßleitung eingebunden. Bei Meßwandlern mit einem einzigen Meßrohr kommuniziert letzteres zumeist über ein einlaßseitig einmündendes im wesentlichen gerades Verbindungsrohrstück sowie über ein auslaßseitig einmündendes im wesentlichen gerades Verbindungsrohrstück mit der Prozeßleitung. Ferner umfaßt jeder der gezeigten Meßwandler mit einem einzigen Meßrohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder zum Meßrohr gegengleich, also gleichfrequent und gegenphasig, oszilliert. Das mittels Meßrohr und Gegenschwinger gebildete Innenteil des Meßwandlers ist zumeist allein mittels der zwei Verbindungsrohrstücke, über die das Meßrohr im Betrieb mit der Prozeßleitung kommuniziert, in einem schutzgebenden Meßwandler-Gehäuse gehaltert, insb. in einer Schwingungen des Innenteil relativ zum Meßrohr ermöglichenden Weise. Bei den beispielsweise in der US-A 52 91 792, der US-A 57 96 010, der US-A 59 45 609, der US-B 70 77 014, der US-A 2007/0119264, der WO-A 01 02 816 oder auch der WO-A 99 40 394 gezeigten Meßwandler mit einem einzigen, im wesentlichen geraden Meßrohr sind letzteres und der Gegenschwinger, wie bei herkömmlichen Meßwandlern durchaus üblich, zueinander im wesentlichen koaxial ausgerichtet. Bei marktgängigen Meßwandlern der vorgenannten Art ist zumeist auch der Gegenschwinger im wesentlichen rohrförmig und als im wesentlichen gerader Hohlzylinder ausgebildet, der im Meßwandler so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Als angeregte Schwingungsform - dem sogenannten Nutzmode - wird bei Meßwandlern mit gekrümmtem, z.B.

U-, V- oder Ω-artig geformtem, Meßrohr üblicherweise jene Eigenschwingungsform gewählt, bei denen das Meßrohr zumindest anteilig bei einer niedrigsten natürlichen Resonanzfrequenz um eine gedachte Längsachse des Meßwandlers nach Art eines an einem Ende eingespannten Auslegers pendelt, wodurch im hindurchströmenden Fluid vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß wenigstens einer ebenfalls natürlichen zweiten Schwingungsform, dem sogenannten Coriolismode, überlagert werden. Bei Meßwandlern mit gekrümmtem Meßrohr entsprechen diese durch Corioliskräfte erzwungenen Auslegerschwingungen im Coriolismode üblicherweise jener Eigenschwingungsform, bei denen das Meßrohr auch Drehschwingungen um eine senkrecht zur Längsachse ausgerichtete gedachte Hochachse ausführt. Bei Meßwandlern mit geradem Meßrohr hingegen wird zwecks Erzeugung von massendurchflußabhängigen Corioliskräften oftmals ein solcher Nutzmode gewählt, bei dem das Meßrohr zumindest anteilig Biegeschwingungen im wesentlichen in einer einzigen gedachten Schwingungsebene ausführt, so daß die Schwingungen im Coriolismode dementsprechend als zu den Nutzmodeschwingungen komplanare Biegeschwingungen gleicher Schwingfrequenz ausgebildet sind. Aufgrund der Überlagerung von Nutz- und Coriolismode weisen die mittels der Sensoranordnung einlaßseitig und auslaßseitig erfaßten Schwingungen des vibrierenden Meßrohrs eine auch vom Massedurchfluß abhängige, meßbare Phasendifferenz auf. Üblicherweise werden die Meßrohre derartiger, z.B. in Coriolis-Massedurchflußmessern eingesetzte, Meßwandler im Betrieb auf einer momentanen natürlichen Resonanzfrequenz der für den Nutzmode gewählten Schwingungsform, insb. bei konstantgeregelter Schwingungsamplitude, angeregt. Da diese Resonanzfrequenz im besonderen auch von der momentanen Dichte des Fluids abhängig ist, kann mittels marktüblicher Coriolis-Massedurchflußmesser neben dem Massedurchfluß zusätzlich auch die Dichte von strömenden Fluiden gemessen werden. Ferner ist es auch möglich, wie beispielsweise in der US-B 66 51 513 oder der US-B 70 80 564 gezeigt, mittels Meßwandlern vom Vibrationstyp, Viskosität des hindurchströmenden Fluids direkt zu messen, beispielsweise basierend auf einer für die Aufrechterhaltung der Schwingungen erforderlichen Erregerenergie bzw. Erregerleistung und/oder basierend auf einer aus einer Dissipation von Schwingungsenergie resultierenden Dämpfung von Schwingungen des wenigstens einen Meßrohrs, insb. denen im vorgenannten Nutzmode. Darüberhinaus können auch weitere, aus den vorgenannten primären Meßwerten Massendurchflußrate, Dichte und Viskosität abgeleitete Meßgrößen, wie etwa gemäß der US-B 65 13 393 die Reynoldszahl zu ermittelt werden.

Zum Erregen von Schwingungen des wenigstens einen Meßrohrs weisen Meßwandler vom Vibrationstyp des weiteren eine im Betrieb von einem von der erwähnten Treiberelektronik generierten und entsprechend konditionierten elektrischen Erregersignal, z.B. einem geregelten Strom, angesteuerte Erregeranordnung auf, die das Meßrohr mittels wenigstens eines im Betrieb von einem Strom durchflossenen, auf das Meßrohr praktisch direkt einwirkenden elektromechanischen, insb. elektro-dynamischen, Schwingungserregers zu Biegeschwingungen im Nutzmode anregt. Desweiteren umfassen derartige Meßwandler eine Sensoranordnung mit, insb. elektro-dynamischen, Schwingungssensoren zum zumindest punktuellen Erfassen einlaßseitiger und auslaßseitiger Schwingungen des wenigstens einen Meßrohrs, insb. denen im Coriolismode, und zum Erzeugen von vom zu erfassenden Prozeßparameter, wie etwa dem Massedurchfluß oder der Dichte, beeinflußten, als Schwingungssignale des Meßwandlers dienenden elektrischen Sensorsignalen. Wie beispielsweise in der US-B 72 16 550 beschrieben können bei Meßwandlern der in Rede stehenden Art gegebenenfalls auch der Schwingungserreger zumindest zeitweise als Schwingungssensor und/oder ein Schwingungssensor zumindest zeitweise als Schwingungserreger verwendet werden. Die Erregeranordnung von Meßwandlern der in Rede stehenden Art weist üblicherweise wenigstens einen elektrodynamischen und/oder differentiell auf das wenigstens eine Meßrohr und den ggf. vorhandenen Gegenschwinger oder das ggf. vorhandene andere Meßrohr einwirkenden Schwingungserreger auf, während die Sensoranordnung einen einlaßseitigen, zumeist ebenfalls elektrodynamischen, Schwingungssensor sowie wenigstens einen dazu im wesentlichen baugleichen auslaßseitigen Schwingungssensor umfaßt. Solche elektrodynamischen und/oder differentiellen Schwingungserreger marktgängiger Meßwandler vom Vibrationstyp sind mittels einer zumindest zeitweise von einem Strom durchflossenen - bei Meßwandlern mit einem Meßrohr und einem daran gekoppelten Gegenschwinger zumeist an letzterem fixierten - Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßwandlern die Erregeranordnung üblicherweise derart ausgebildet und im Meßwandler plaziert, daß sie im wesentlichen mittig an das wenigstens eine Meßrohr angreift. Dabei ist der Schwingungserreger und insoweit die Erregeranordnung, wie beispielsweise auch bei den in der US-A 57 96 010, der US-B 68 40 109, der US-B 70 77 014 oder der US-B 70 17 424 vorgeschlagenen Meßwandlern gezeigt, zumeist zumindest punktuell entlang einer gedachten mittigen Umfangslinie des Meßrohrs außen an diesem fixiert. Alternativ zu einer mittels eher zentral und direkt auf das Meßrohr wirkenden Schwingungserregern gebildeten Erregeranordnung können, wie u.a. in der US-B 65 57 422, der US-A 60 92 429 oder der US-A 48 23 614 vorgeschlagen, beispielsweise auch mittels zweier nicht im Zentrum des Meßrohres, sondern eher ein- bzw. auslaßseitig an diesem fixierten Schwingungserreger gebildete Erregeranordnungen verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßwandler-Gehäuse wirkenden Schwingungserreger gebildete Erregeranordnungen verwendet werden. Bei den meisten marktgängigen Meßwandlern vom Vibrationstyp sind die Schwingungssensoren der Sensoranordnung, wie bereits angedeutet, zumindest insoweit im wesentlichen baugleich ausgebildet wie der wenigstens eine Schwingungserreger, als sie nach dem gleichen Wirkprinzip arbeiten. Dementsprechend sind auch die Schwingungssensoren einer solchen Sensoranordnung zumeist jeweils mittels wenigstens einer - üblicherweise am ggf. vorhandene Gegenschwinger fixierten -, zumindest zeitweise von einem veränderlichen Magnetfeld durchsetzte und damit einhergehend zumindest zeitweise mit einer induzierten Meßspannung beaufschlagten sowie einem am Meßrohr fixierten, mit der wenigstens einen Spule zusammenwirkenden dauermagnetischen Anker gebildet, der das Magnetfeld liefert. Jede der vorgenannten Spulen ist zudem mittels wenigstens eines Paars elektrischer Anschlußleitungen mit der erwähnten Umformer-Elektronik des In-Line-Meßgeräts verbunden, die zumeist auf möglichst kurzem Wege von den Spulen über den Gegenschwinger hin zum Meßwandler-Gehäuse geführt sind.

Wie u.a. in den eingangs erwähnten US-B 74 06 878, US-B 73 05 892, US-B 71 34 348, US-B 65 13 393, US-A 58 61 561, US-A 53 59 881 bzw. WO-A 2004/072588 diskutiert, kann ein weiterer, für den Betrieb des Meßsystems als solches und/oder für den Betrieb der Anlage, in der das Meßsystem installiert ist, relevanter Parameter ein - beispielsweise durch den Meßwandler und insoweit das Meßsystems selbst provozierter - Druckverlust in der Strömung bzw. ein daraus resultierender abgesenkter Druck auslaßseitig des Meßwandlers sein, dies nicht zuletzt auch für den Fall, daß das Fluid zwei- oder mehrphasig ausgebildet ist, etwa als Flüssigkeits-Gas-Gemisch, und/oder daß im Betrieb mit unerwünschter, nicht zuletzt auch die strukturelle Integrität des Meßwandlers gefährdender Kavitation infolge Unterschreitens eines minimalen statischen Drucks im strömenden Fluid zu rechnen bzw. diese unbedingt zu vermeiden ist WO-A 2009/089839 offenbart ein Meßsystem gemäß dem Oberbegriff des Anspruchs 1.

Eine Aufgabe der Erfindung besteht daher darin, mittels Meßwandler vom Vibrationstyp gebildet Meßsysteme dahingehend zu verbessern, daß damit das Auftreten von Kavitation im durch den Meßwandler strömenden Fluid möglichst frühzeitig und zuverlässig detektiert werden kann, nicht zuletzt auch zwecks Signalisierung bzw. Kompensation einer erhöhten Meßungenauigkeit und/oder zwecks Alarmierung eines durch den Meßwandler provozierten unerwünscht hohen Druckabfalls im durch den Meßwandler strömenden Fluid und/oder zwecks Ermittlung eines erhöhten Verschleißes des Meßwandlers infolge von Kavitationsfraß; dies im besonderen auch unter weitgehender, ggf. auch ausschließlicher Verwendung der in solchen Meßsystemen bewährten Meßtechnik, wie etwa etablierte Schwingungssensorik und/oder -aktorik, oder auch bewährten Technologien und Architekturen etablierter Umformer-Elektroniken.

Zur Lösung der Aufgabe besteht die Erfindung in einem Meßsystem, insb. Kompakt-Meßgerät und/oder Coriolis-Massedurchfluß-Meßgerät, gemäß Anspruch 1.

Nach einer ersten Ausgestaltung der Erfindung ist ferner vorgesehen, daß die Umformer-Elektronik wenigstens ein Biegeschwingungen des wenigstens einen Meßrohrs bewirkendes Erregersignal für den wenigstens eine Schwingungserreger liefert. Diese Ausgestaltung der Erfindung weiterbildend ist ferner vorgesehen, daß das Erregersignal - zumindest aber eine hinsichtlich einer Signalleistung und/oder einer Signalspannung dominierende, Biegeschwingungen des Meßrohrs erzwingende Nutz-Signalkomponente nämlichen Erregersignals - eine Signalfrequenz aufweist, die einer momentanen Resonanzfrequenz von Biegeschwingungen des Meßrohrs entspricht, insb. einer momentanen Resonanzfrequenz eines Biegeschwingungsmodes erster Ordnung, in dem das wenigstens eine vibrierende Meßrohr über eine Nutzschwinglänge Biegeschwingungen mit genau einem Schwingungsbauch ausführt, so daß das wenigstens eine Meßrohr, angeregt vom wenigstens einen Schwingungserreger im Nutzmode vibrierend, zumindest anteilig Biegeschwingungen mit einer momentanen Resonanzfrequenz ausführt. Beispielsweise kann die Signalfrequenz des Erregersignal bzw. der Nutz-Signalkomponente des Erregersignal einer momentanen Resonanzfrequenz eines Biegeschwingungsmodes erster Ordnung, in dem das wenigstens eine vibrierende Meßrohr über eine Nutzschwinglänge Biegeschwingungen mit genau einem Schwingungsbauch ausführt, entsprechen, und kann die erste Signalkomponente des Schwingungssignals eine Signalfrequenz aufweisen, die größer ist als die der momentanen Resonanzfrequenz des Biegeschwingungsmodes erster Ordnung entsprechende Signalfrequenz des Erregersignals.

Nach einer zweiten Ausgestaltung der Erfindung ist ferner vorgesehen, daß die erste Signalkomponente des Schwingungssignals eine Signalfrequenz aufweist, die einer momentanen Resonanzfrequenz eines dem Meßrohr innewohnenden natürlichen Biegeschwingungsmode entspricht, in dem das Meßrohr Biegeschwingungen mit genau einem Schwingungsbauch mehr als bei den Biegeschwingungen im Nutzmode ausführt, insb. einem Biegeschwingungsmodes zweiter Ordnung, in dem das wenigstens eine vibrierende Meßrohr über eine Nutzschwinglänge Biegeschwingungen mit genau zwei Schwingungsbäuchen ausführt und/oder einem infolge von im im Nutzmode vibrierenden Meßrohr strömenden Fluid induzierten Corioliskräften angeregten Coriolismode.

Nach einer dritten Ausgestaltung der Erfindung ist ferner vorgesehen, daß die zweite Signalkomponente des Schwingungssignals einen Biegeschwingungsmode repräsentiert, in dem das wenigstens eine vibrierende Meßrohr Biegeschwingungen mit wenigstens drei Schwingungsbäuchen ausführt. Diese Ausgestaltung der Erfindung weiterbildend ist ferner vorgesehen, daß die zweite Signalkomponente des Schwingungssignals eine Signalfrequenz aufweist, die einer momentanen Resonanzfrequenz jenes Biegeschwingungsmodes dritter Ordnung entspricht, in dem das wenigstens eine vibrierende Meßrohr Biegeschwingungen mit genau zwei Schwingungsbäuchen mehr als bei den Biegeschwingungen im Nutzmode ausführt. Der Schwellenwert für den Betrag der Signalspannung der ersten Signalkomponente des Schwingungssignals kann dabei beispielsweise so gewählt sein, daß er größer als ein Betrag der Signalspannung der zweiten Signalkomponente des Schwingungssignals ist. Alternativ oder in Ergänzung dazu können der Schwellenwert für den Betrag der Signalspannung der ersten Signalkomponente des Schwingungssignals und der Schwellenwert für den Betrag der Signalspannung der zweiten Signalkomponente des Schwingungssignals so gewählt sein, daß ein Schwellenwerte-Verhältnis, definiert durch ein Verhältnis des Schwellenwerts für den Betrag der Signalspannung der ersten Signalkomponente des Schwingungssignals zum Schwellenwert für den Betrag der Signalspannung der zweiten Signalkomponente des Schwingungssignals größer als eins ist. Ferner kann die Umformer-Elektronik auch so eingerichtet sein, daß sie die Kavitationsmeldung nur dann generiert, wenn ein Signalspannungen-Verhältnis, definiert durch ein Verhältnis eines Betrag einer Signalspannung der ersten Signalkomponente des Schwingungssignals zu einem Betrag einer Signalspannung der zweiten Signalkomponente des Schwingungssignals, einen für nämliches Signalspannungen-Verhältnis vorgegebenen, insb. im Betrieb veränderbaren und/oder von einer momentanen Signalspannung der ersten Signalkomponente des Schwingungssignals abhängigen und/oder von einer momentanen Signalspannung der zweiten Signalkomponente des Schwingungssignals abhängigen, Schwellenwert überschreitet.

Nach einer vierten Ausgestaltung der Erfindung ist ferner vorgesehen, daß die Umformer-Elektronik die Kavitationsmeldung auch unter Verwendung eines, beispielsweise in einem in der Umformer-Elektronik vorgesehenen flüchtigen Datenspeicher vorgehaltenen, Druck-Meßwerts, der einen, etwa stromaufwärts eines Auslaßendes des Meßwandlers und/oder stromabwärts eines Einlaßendes des Meßwandlers, im strömenden Fluid herrschenden, beispielsweise mittels eines mit der Umformer-Elektronik kommunizierenden Drucksensors gemessenen und/oder mittels Schwingungssignalen des Meßwandlers ermittelten und/oder statischen und/oder mittels einer Pumpe eingestellten, Druck repräsentiert.

Nach einer fünften Ausgestaltung der Erfindung ist ferner vorgesehen, daß das Meßsystem weiters einen im Betrieb mit der Umformer-Elektronik kommunizierenden Drucksensor zum Erfassen eines, insb. stromaufwärts eines Einlaßendes des Meßwandlers oder stromabwärts eines Auslaßendes des Meßwandlers, in einer das Fluid führenden Rohrleitung herrschenden, beispielsweise statischen, Drucks umfaßt.

Nach einer sechsten Ausgestaltung der Erfindung ist ferner vorgesehen, daß die Umformer-Elektronik wenigstens ein Biegeschwingungen des wenigstens einen Meßrohrs bewirkendes Erregersignal für den wenigstens eine Schwingungserreger liefert, und daß die Umformer-Elektronik mittels des Erregersignals und mittels des Schwingungssignals einen Druckdifferenz-Meßwert generiert, der eine zwischen zwei vorgegebenen Referenzpunkten im strömenden Fluid auftretende Druckdifferenz repräsentiert, beispielsweise derart, daß ein erster der beiden Referenzpunkte einlaßseitig und/oder ein zweiter der beiden Referenzpunkte auslaßseitig im Meßwandler lokalisiert sind. Die Umformer-Elektronik kann den Druckdifferenz-Meßwert dabei beispielsweise unter Verwendung eines, etwa in einem in der Umformer-Elektronik vorgesehenen flüchtigen Datenspeicher vorgehaltenen und/oder mittels des Erregersignal und/oder mittels wenigstens eines vom Meßwandler gelieferten Schwingungssignals erzeugten, Reynoldszahl-Meßwerts, der eine Reynoldszahl für im Meßwandler strömendes Fluid repräsentiert, und/oder unter Verwendung eines, etwa in einem in der Umformer-Elektronik vorgesehenen flüchtigen Datenspeicher intern vorgehaltenen und/oder im Betrieb mittels des Erregersignal und/oder mittels wenigstens eines der Schwingungssignale erzeugten, Viskositäts-Meßwert, der eine Viskosität von im Meßwandler strömendem Fluid repräsentiert, ermitteln, beispielsweise auch derart, daß die Umformer-Elektronik zur Ermittlung des Druckdifferenz-Meßwerts einen Druckabfall-Koeffizienten generiert, der einen von der momentanen Reynoldszahl des strömenden Fluids abhängigen Druckabfall über dem Meßwandler, bezogen auf eine momentane kinetische Energie des im Meßwandler strömenden Fluids repräsentiert, ermitteln. Diese siebenten Ausgestaltung der Erfindung weiterbildend ist ferner vorgesehen, daß die Umformer-Elektronik die Kavitationsmeldung unter Verwendung des Druckdifferenz-Meßwerts generiert. Alternativ oder in Ergänzung kann die die Umformer-Elektronik unter Verwendung des Druckdifferenz-Meßwerts beispielsweise auch einen Alarm, der ein Überschreiten einer vorab definierten, maximal zulässigen Absenkung eines statischen Drucks im durch den Meßwandler strömenden Fluid, etwa und/oder akustisch wahrnehmbar, signalisiert, und/oder einen Alarm, der einen durch den Meßwandler provozierten, zu hohen Druckabfall im Fluid, beispielsweise auch visuell und/oder akustisch wahrnehmbar, signalisiert, generieren.

Ein Grundgedanke der Erfindung besteht darin, anhand einzelner ausgewählter spektraler Signalkomponenten wenigstens eines der Schwingungssignale, etwa auch durch Auswerten von deren Signalamplitude(n) und/oder von deren relativer Lage im Frequenzspektrum, das Auftreten von, regelmäßig unerwünschter bzw. auch schädlicher, Kavitation innerhalb des mittels des jeweiligen Meßsystems tatsächlich zu messende Fluids zu detektieren; dies ggf. auch unter weiterer Hinzunahme einiger weniger, für die Messung strömender Fluid etablierter Meßwerte, wie der Dichte, der Viskosität, der Massendurchflußrate und/oder der Reynoldszahl, die in Meßsystemen der in Rede stehenden Art typischerweise ohnehin vorliegen, insb. auch intern ermittelt werden, und/oder anhand von weiteren, mittels der Umformer-Elektronik solcher Meßsysteme typischerweise intern generierten Betriebsparametern, wie etwa einer Phasendifferenz zwischen den ein- und auslaßseitige Schwingungen des wenigstens einen Meßrohrs repräsentierenden Schwingungssignalen. Die Erfindung basiert dabei nicht zuletzt auch auf der überraschenden Erkenntnis, daß, ggf. sogar allein, anhand von Schwingungssignalen der vorgenannten Art, mithin einer darauf angewandten Spektralanalyse bzw. frequenzabhängiger Selektion einzelner spektraler Signalkomponenten davon, im strömenden Fluid allfällig auftretende Kavitation mit einer zu Zwecken der Alarmierung ausreichend guter Genauigkeit und Verläßlichkeit ermittelt werden kann; dies auch über einen sehr weiten Reynoldszahlbereich, also sowohl für laminare als auch turbulente Strömung. Ein Vorteil der Erfindung besteht dabei im besonderen darin, daß zur Realisierung der erfindungsgemäßen Kavitationsdetektion/-signalisierung sowohl auf betriebsbewährte konventionelle Meßwandler als auch auf betriebsbewährte konventionelle - hinsichtlich der für die Auswertung implementierten Software selbstverständlich entsprechend angepaßte - Umformer-Elektroniken zurückgegriffen werden kann.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Unteransprüchen an sich.

Im einzelnen zeigen:

Fig. 1a, b   eine Variante eines als Kompakt-Meßgerät ausgebildetes Meßsystem für in Rohrleitungen strömende Fluiden in verschiedenen Seitenansichten;

Fig. 2a, b   eine weitere Variante eines als Kompakt-Meßgerät ausgebildetes Meßsystem für in Rohrleitungen strömende Fluiden in verschiedenen Seitenansichten;

Fig. 3   schematisch nach Art eines Blockschaltbildes eine, insb. auch für ein Meßsystem gemäß den Fig. 1a, 1b, 2a, 2b, geeignete, Umformer-Elektronik mit daran angeschlossenem Meßwandler vom Vibrationstyp;

Fig. 4, 5   in, teilweise geschnittenen bzw. perspektivischen, Ansichten eine Variante eines, insb. für ein Meßsystem gemäß den Fig. 1a, 1b geeigneten, Meßwandlers vom Vibrations-Typ;

Fig. 6, 7   in, teilweise geschnittenen bzw. perspektivischen, Ansichten eine weitere Variante eines, insb. für ein Meßsystem gemäß den Fig. 2a, 2b geeigneten, Meßwandlers vom Vibrations-Typ;

Fig. 8 bis 12   Ergebnisse von im Zusammenhang mit der Erfindung, insb. auch unter Anwendung von computerbasierten Simulationsprogrammen und/oder mittels realer Meßsysteme im Labor, durchgeführten experimentellen Untersuchungen bzw. daraus abgeleitete, der Ermittlung einer Druckdifferenz in einem durch einen Meßwandler vom Vibrationstyp - etwa gemäß den Fig. 4, 5 bzw. 6, 7 - hindurchströmenden Fluid dienende Kennlinienverläufe; und

Fig. 13   experimentell, insb. auch unter Anwendung von computerbasierten Simulationsprogrammen, ermittelte Druckverlustprofile in einem konventionellen Meßwandler vom Vibrationstyp.

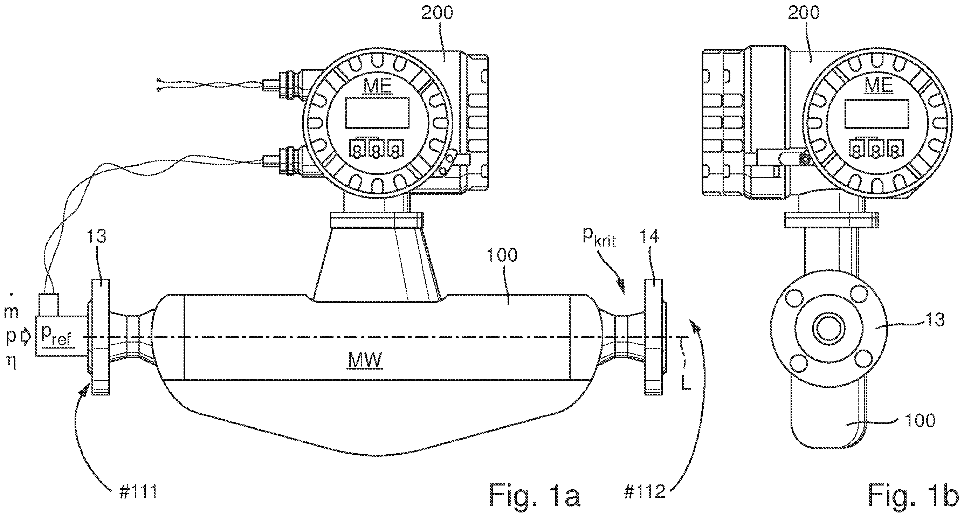

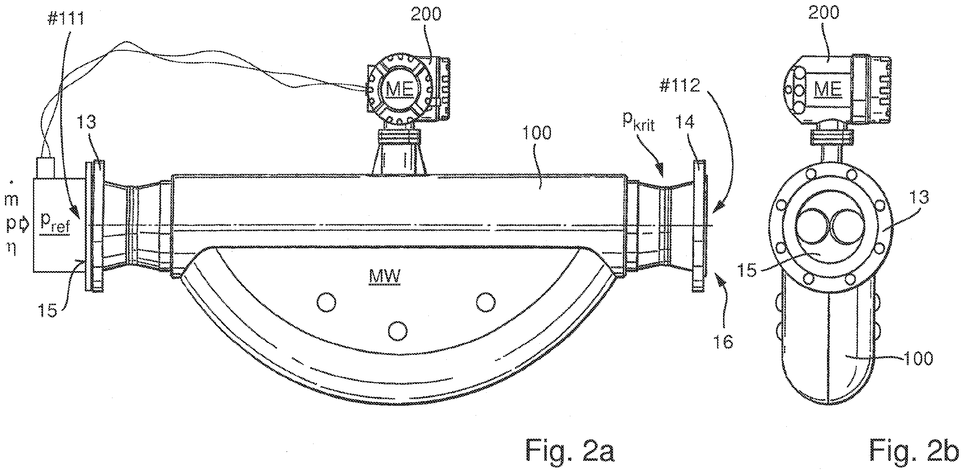

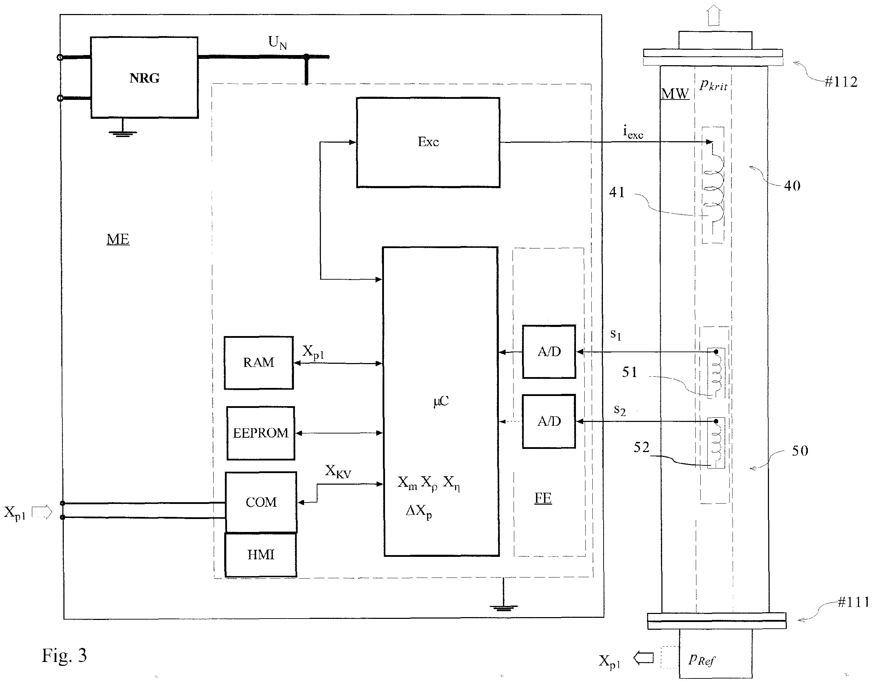

In den Fig. 1a, 1b bzw. 2a, 2b ist jeweils eine Variante eines in eine Prozeßleitung, etwa eine Rohrleitung einer industriellen Anlage, einfügbares, beispielsweise mittels eines Coriolis-Massendurchflußmeßgerät, Dichtemeßgerät, Viskositätsmeßgerät oder dergleichen gebildetes, Meßsystem für Fluide, mithin Flüssigkeiten oder Pasten, dargestellt, das im besonderen dem Detektieren von in einem in der Prozeßleitung strömenden Fluid auftretender Kavitation dient, ggf. auch noch dem Messen und/oder Überwachen wenigstens einer weiteren physikalischen Meßgröße des Fluids, wie etwa einer Massendurchflußrate und/oder einer Dichte etc.. Das - hier mittels eines In-Line-Meßgeräts in Kompaktbauweise realisierte - Meßsystem umfaßt dafür einen über ein Einlaßende #111 sowie ein Auslaßende #112 an die Prozeßleitung angeschlossenen Meßwandler MW vom Vibrationstyp, welcher Meßwandler im Betrieb entsprechend vom zu messenden Fluid, wie etwa einer niedrigviskosen Flüssigkeit und/oder einer hochviskosen Paste und/oder einem Gas, durchströmt und an eine, insb. im Betrieb von extern via Anschlußkabel und/oder mittels interner Energiespeicher mit elektrischer Energie versorgte, Umformer-Elektronik ME des Meßsystems angeschlossen ist. Diese weist, wie in Fig. 3 schematisch nach Art eines Blockschaltbildes dargestellt, eine dem Ansteuern des Meßwandlers dienende Treiber-Schaltung Exc sowie eine Schwingungssignale des Meßwandlers MW verarbeitende, beispielsweise mittels eines Mikrocomputers gebildete und/oder im Betrieb mit der Treiber-Schaltung Exc kommunizierende, Meß- und Auswerte-Schaltung $\mu C$ des Meßsystems elektrisch angeschlossen ist, die im Betrieb die wenigstens eine Meßgröße, wie z.B. den momentanen oder einen totalisierten Massendurchfluß, repräsentierende Meßwerte liefert. Die Treiber-Schaltung Exc und die Auswerte-Schaltung $\mu C$ sowie weitere, dem Betrieb des Meßsystems dienende Elektronik-Komponenten der Umformer-Elektronik, wie etwa interne Energieversorgungsschaltungen NRG zum Bereitstellen interner Versorgungsspannungen $U_N$ und/oder dem Anschluß an ein übergeordnetes Meßdatenverarbeitungssystem und/oder einem Feldbus dienenden Kommunikationsschaltungen COM, sind ferner in einem entsprechenden, insb. schlag- und/oder auch explosionsfest und/oder hermetisch dicht ausgebildeten, Elektronikgehäuse 200 untergebracht. Zum Visualisieren von Meßsystem intern erzeugten Meßwerten und/oder gegebenenfalls Meßsystem intern generierten Statusmeldungen, wie etwa eine Fehlermeldung oder einen Alarm, vor Ort kann das Meßsystem desweiteren ein zumindest zeitweise mit der Umformer-Elektronik kommunizierendes Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, insb. programmierbare und/oder fernparametrierbare, Umformer-Elektronik ME ferner so ausgelegt sein, daß sie im Betrieb des In-Line-Meßgeräts mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des In-line-Meßgeräts dienende Einstell- und/oder Diagnosewerte. Dabei kann die Umformer-Elektronik ME beispielsweise eine solche interne Energieversorgungsschaltung NRG aufweisen, die im Betrieb von einer im Datenverarbeitungssystem vorgesehen externen Energieversorgung über das vorgenannte Feldbussystem gespeist wird. Gemäß einer Ausgestaltung der Erfindung ist die Umformer-Elektronik ferner so ausgebildet, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann. Für den Fall, daß das Meßsystem für eine Ankopplung an ein Feldbus- oder ein anderes Kommunikationssystem vorgesehen ist, kann die Umformer-Elektronik ME eine entsprechende Kommunikations-Schnittstelle COM für eine Datenkommunikation gemäß einem der einschlägigen Industriestandards aufweisen. Das elektrische Anschließen des Meßwandlers an die erwähnte Umformer-Elektronik kann mittels entsprechender Anschlußleitungen erfolgen, die aus dem Elektronik-Gehäuse 200, beispielsweise via Kabeldurchführung, heraus geführt und zumindest abschnittsweise innerhalb des Meßwandlergehäuses verlegt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twistedpair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872.

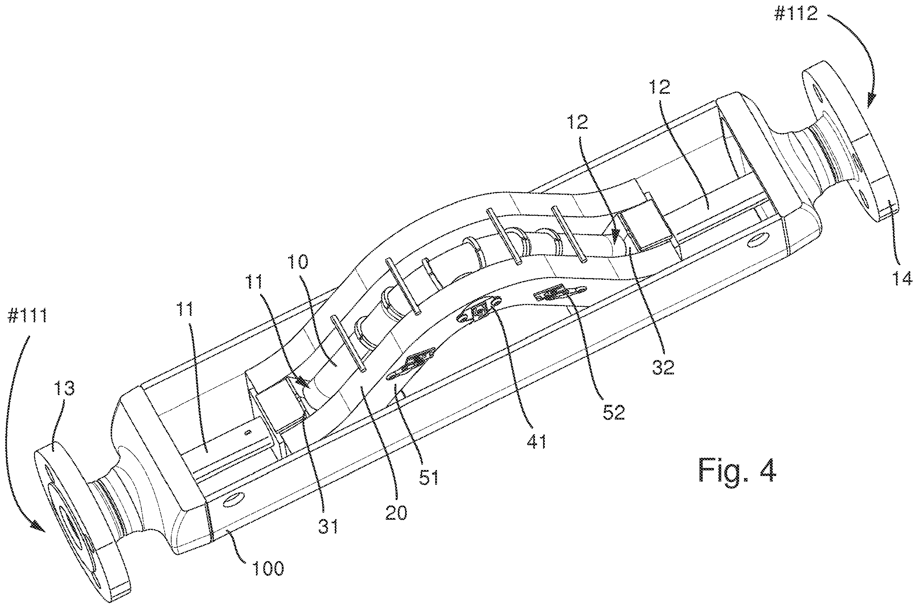

In den Fig. 4 und 5 bzw. 6 und 7 sind zur weiteren Erläuterung der Erfindung ein erstes bzw. ein zweites Ausführungsbeispiel für einen für die Realisierung des Meßsystems geeigneten Meßwandler MW vom Vibrationstyp schematisch dargestellt. Der Meßwandler MW dient generell dazu, in einem hindurchströmenden Fluid, etwa einem Gas und/oder einer Flüssigkeit, mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so z.B. ein Massedurchfluß m, eine Dichte $\rho$ und/oder eine Viskosität $\eta$ des Fluids gemessen werden. Jeder der Meßwandler umfaßt dafür jeweils ein in einem Meßwandler-Gehäuse 100 angeordnetes, die physikalisch-elektrische Konvertierung des wenigstens einen zu messenden Parameters eigentlich bewirkendes Innenteil. Zusätzlich zur Aufnahme des Innenteils kann das Meßwandlergehäuse 100 zudem auch dazu dienen, das Elektronikgehäuse 200 des In-line-Meßgeräts mit darin untergebrachter Treiber- und Auswerte-Schaltung zu haltern.

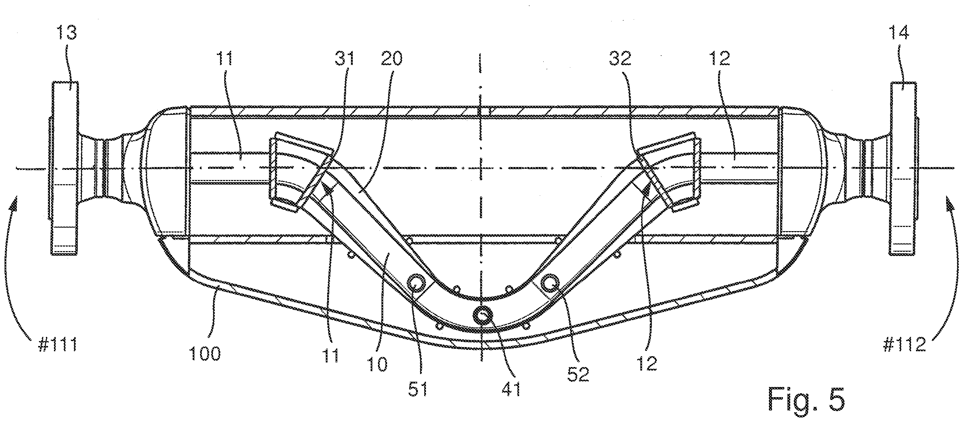

Zum Führen von strömendem Fluids umfaßt das Innenteil des Meßwandlers generell wenigstens ein erstes - im in den Fig. 4 und 5 gezeigten Ausführungsbeispiel einziges zumindest abschnittsweise gekrümmtes - Meßrohr 10, das sich zwischen einem einlaßseitigen ersten Meßrohrende 11# und einem auslaßseitigen zweiten Meßrohrende 12# mit einer Nutzschwinglänge erstreckt und zum Erzeugen vorgenannter Reaktionskräfte im Betrieb zumindest über seine Nutzschwinglänge vibrieren gelassen und dabei, um eine statische Ruhelage oszillierend, wiederholt elastisch verformt wird. Die Nutzschwinglänge entspricht hierbei einer Länge einer innerhalb von Lumen verlaufende gedachte Mittel- oder auch Schwerelinie (gedachte Verbindungslinie durch die Schwerpunkte aller Querschnittsflächen des Meßrohrs), im Falle eines gekrümmten Meßrohrs also einer gestreckten Länge des Meßrohrs 10.

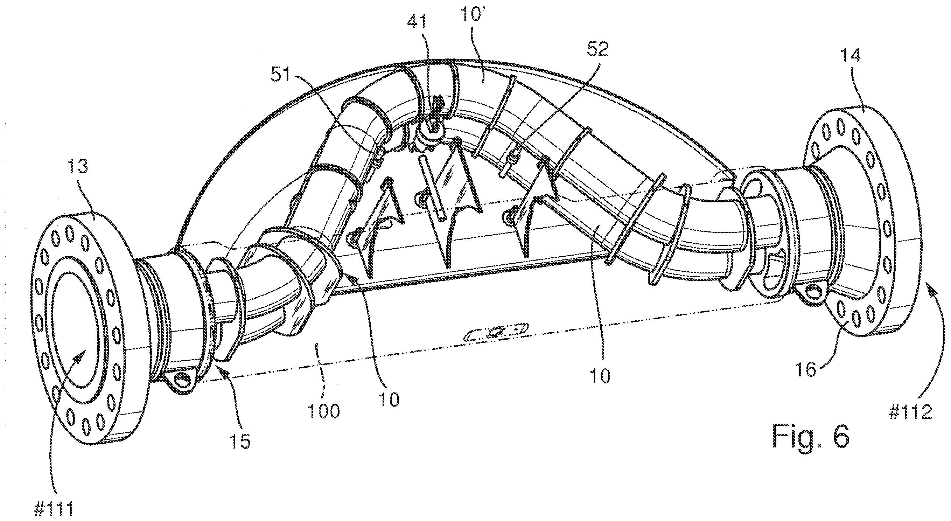

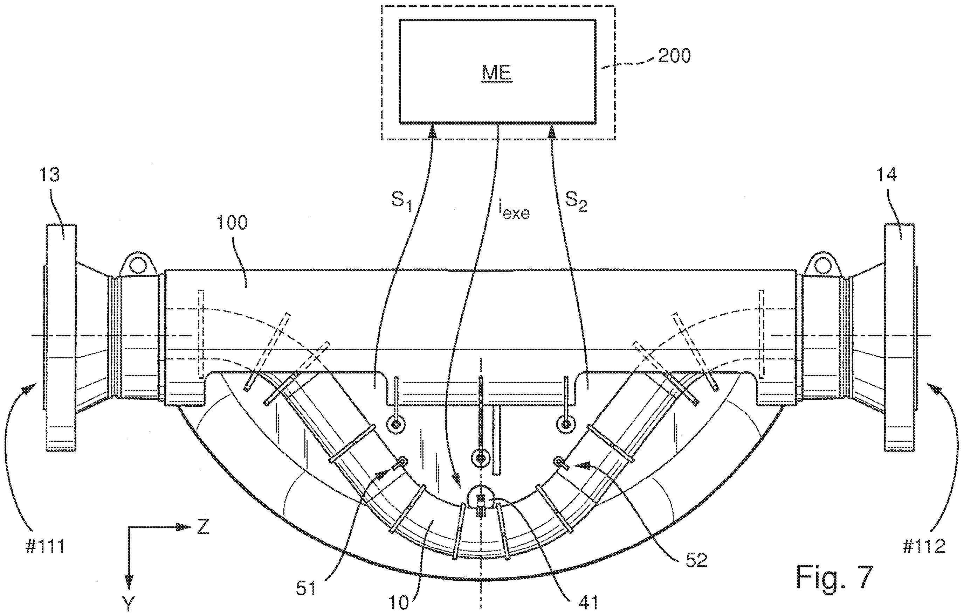

Es sei an dieser Stelle ausdrücklich darauf hingewiesen, daß - obwohl der Meßwandler im in den Fig. 4 und 5 gezeigten Ausführungsbeispiel lediglich ein einziges gekrümmtes Meßrohr aufweist und zumindest insoweit in seinem mechanischen Aufbau wie auch seinem Wirkprinzip dem in den US-B 73 60 451 oder der US-B 66 66 098 vorgeschlagenen bzw. auch den seitens der Anmelderin unter der Typbezeichnung "PROMASS H", "PROMASS P" oder "PROMASS S" käuflich angebotenen Meßwandlern ähnelt - zur Realisierung der Erfindung selbstverständlich auch Meßwandler mit geradem und/oder mehr als einem Meßrohr dienen können, etwa vergleichbar den in den eingangs erwähnten US-A 60 06 609, US-B 65 13 393, US-B 70 17 424, US-B 68 40 109, US-B 69 20 798, US-A 57 96 011, US-A 57 31 527 oder US-A 56 02 345 gezeigten oder beispielsweise auch den seitens der Anmelderin unter der Typbezeichnung "PROMASS I", "PROMASS M" bzw. "PROMASS E" oder "PROMASS F" käuflich angebotenen Meßwandlern jeweils mit zwei parallelen Meßrohren. Demnach kann der Meßwandler auch ein einziges gerades Meßrohr oder wenigstens zwei, beispielsweise mittels eines einlaßseitigen Strömungsteilers und eines auslaßseitigen Strömungsteilers, ggf. zusätzlich auch noch mittels wenigstens eines einlaßseitigen Koppelelements und wenigstens eines auslaßseitigen Koppelelements, miteinander mechanisch gekoppelte und/oder einander baugleiche und/oder gekrümmte und/oder zueinander parallele, Meßrohre zum Führen von zu messendem Fluid aufweisen, die im Betrieb zum Erzeugen der Schwingungssignale zumindest zeitweise vibrieren, etwa frequenzgleich auf einer gemeinsamen Schwingfrequenz, jedoch zueinander gegenphasig. Gemäß einer Weiterbildung der Erfindung umfaßt der Meßwandler, wie etwa in Fig. 6 und 7 schematisch dargestellt, daher zusätzlich zum ersten Meßrohr 10 eine zweites Meßrohr 10', daß unter Bildung einer ersten Kopplungszone einlaßseitig mittels eines, beispielsweise plattenförmigen, ersten Kopplerelements und unter Bildung einer zweiten Kopplungszone auslaßseitig mittels eines, beispielsweise plattenförmigen und/oder zum ersten Kopplerelement baugleichen, zweiten Kopplerelements mit dem ersten Meßrohr 10 mechanisch verbunden ist. Auch in diesem Fall definieren also die erste Kopplungszone jeweils ein einlaßseitiges erstes Meßrohrende 11#, 11'# jedes der zwei Meßrohre 10, 10' und die zweite Kopplungszone jeweils ein auslaßseitiges zweites Meßrohrende 12#, 12'# jedes der zwei Meßrohre 10, 10'. Da für den Fall, daß das Innenteil mittels zweier Meßrohre gebildet ist, jedes der beiden, insb. im Betrieb im wesentlichen gegenphasig zueinander oszillierenden und/oder zueinander parallelen und/oder hinsichtlich Form und Material baugleichen, Meßrohre 10, 10' dem Führen von zu messendem Fluid dient, mündet jedes der zwei Meßrohre nach einer weiteren Ausgestaltung dieser zweiten Variante des erfindungsgemäßen Meßwandlers einlaßseitig in jeweils eine von zwei voneinander beabstandeten Strömungsöffnungen eines dem Aufteilen von einströmendem Fluid in zwei Teilströmungen dienenden ersten Strömungsteiler 15 und auslaßseitig in jeweils eine von zwei voneinander beabstandeten Strömungsöffnungen eines dem Wiederzusammenführen der Teilströmungen dienenden zweiten Strömungsteilers 16, so daß also beide Meßrohre im Betrieb des Meßsystem gleichzeitig und parallel von Fluid durchströmt sind. Im in den Fig. 6 und 7 gezeigten Ausführungsbeispiel sind die Strömungsteiler insoweit integraler Bestandteil des Meßwandlergehäuses, als mittels des ersten Strömungsteilers ein das Einlaßende #111 des Meßwandlers definierendes einlaßseitige erstes Gehäuseende und mittels des zweiten Strömungsteilers ein das Auslaßende #112 des Meßwandlers definierendes auslaßseitige zweite Gehäuseende gebildet sind.

Wie aus der Zusammenschau der Fign. 4 und 5 bzw. 6 und 7 ohne weiteres ersichtlich, ist das wenigstens eine Meßrohr 10 jeweils so geformt, daß vorgenannte Mittellinie, wie bei Meßwandlern der in Rede stehenden Art durchaus üblich, in einer gedachten Rohrebene des Meßwandlers liegt. Nach einer Ausgestaltung der Erfindung wird das wenigstens eine Meßrohr 10 im Betrieb dabei so vibrieren gelassen, daß es um eine Schwingungsachse, insb. in einem Biegeschwingungsmode, schwingt, die zu einer die beiden Meßrohrenden 11#, 12# imaginär verbindenden gedachten Verbindungsachse parallel oder koinzident ist, mithin also um seine zugewiesene statische Ruhelage oszilliert. Das wenigstens eine Meßrohr 10 ist ferner so geformt und im Meßwandler angeordnete, daß vorgenannte Verbindungsachse im wesentlichen parallel zu einer Ein- und Auslaßende des Meßwandlers imaginär verbindenden gedachten Längsachse L des Meßwandlers verläuft, ggf. auch koinzidiert.

Das wenigstens eine, beispielsweise aus Edelstahl, Titan, Tantal bzw. Zirkonium oder einer Legierung davon hergestellte, Meßrohr 10 des Meßwandlers und insoweit auch eine innerhalb von Lumen verlaufende gedachte Mittellinie des Meßrohrs 10 kann z.B. im wesentlichen U-förmig oder, wie auch in der Fig. 4 und 5 bzw. 6 und 7 gezeigt, im wesentlichen V-förmig ausgebildet sein. Da der Meßwandler für eine Vielzahl unterschiedlichster Anwendungen, insb. im Bereich der industriellen Meß- und Automatisierungstechnik einsetzbar sein soll, ist ferner vorgesehen, daß das Meßrohr je nach Verwendung des Meßwandlers einen Durchmesser aufweist, der im Bereich zwischen etwa 1 mm und etwa 100 mm liegt.

Zur Minimierung von auf das mittels eines einzigen Meßrohrs gebildeten Innenteils wirkenden Störeinflüssen wie auch zur Reduzierung von seitens des jeweiligen Meßwandlers an die angeschlossene Prozeßleitung insgesamt abgegebener Schwingungsenergie umfaßt das Innenteil des Meßwandlers gemäß dem in den Fig. 4 und 5 gezeigten Ausführungsbeispiel desweiteren einen mechanisch mit dem - hier einzigen gekrümmten - Meßrohr 10 gekoppelten, beispielsweise ähnlich wie das Meßrohr U- bzw. V-förmige ausgebildete, Gegenschwinger 20. Dieser ist, wie auch in Fig. 2 gezeigt, vom Meßrohr 10 seitlich beabstandet im Meßwandler angeordnet und unter Bildung einer - letztlich vorgenanntes erstes Meßrohrende 11# definierenden - ersten Kopplungszone einlaßseitig und der unter Bildung einer - letztlich vorgenanntes zweites Meßrohrende 12# definierenden - zweiten Kopplungszone auslaßseitig jeweils am Meßrohr 10 fixiert. Der - hier im wesentlichen parallel zum Meßrohr 10 verlaufende, ggf. auch koaxial zu diesem angeordnete - Gegenschwinger 20 ist aus einem zum Meßrohr hinsichtlich des Wärmeausdehnungsverhaltens kompatiblen Metall, wie etwa Stahl, Titan bzw. Zirkonium, hergestellt und kann dabei beispielsweise rohrförmig oder auch im wesentlichen kastenförmig auch ausgeführt sein. Wie in Fig. 2 dargestellt oder u.a. auch in der US-B 73 60 451 vorgeschlagen, kann der Gegenschwinger 20 beispielsweise mittels links- und rechtsseitig des Meßrohrs 10 angeordneten Platten oder auch links- und rechtsseitig des Meßrohrs 10 angeordneten Blindrohren gebildet sein. Alternativ dazu kann der Gegenschwinger 20 - wie etwa in der US-B 66 66 098 vorgeschlagen - auch mittels eines einzigen seitlich des Meßrohrs und parallel dazu verlaufenden Blindrohrs gebildet sein. Wie aus einer Zusammenschau der Fign. 2 und 3 ersichtlich, ist der Gegenschwinger 20 im hier gezeigten Ausführungsbeispiel mittels wenigstens eines einlaßseitigen ersten Kopplers 31 am ersten Meßrohrende 11# und mittels wenigstens eines auslaßseitigen, insb. zum Koppler 31 im wesentlichen identischen, zweiten Kopplers 32 am zweiten Meßrohrende 12# gehaltert. Als Koppler 31, 32 können hierbei z.B. einfache Knotenplatten dienen, die in entsprechender Weise einlaßseitig und auslaßseitig jeweils an Meßrohr 10 und Gegenschwinger 20 befestigt sind. Ferner kann - wie bei dem in den Fig. 2 und 3 gezeigten Ausführungsbeispiel vorgeschlagen - ein mittels in Richtung der gedachten Längsachse L des Meßwandlers voneinander beabstandeten Knotenplatten zusammen mit überstehenden Enden des Gegenschwinger 20 einlaßseitig und auslaßseitig jeweils gebildeter, vollständig geschlossener Kasten oder ggf. auch teilweise offener Rahmen als Koppler 31 bzw. als Koppler 32 dienen. Wie in den Fig. 2 und 3 schematisch dargestellt, ist das Meßrohr 10 ferner über ein einlaßseitig im Bereich der ersten Kopplungszone einmündendes gerades erstes Verbindungsrohrstück 11 und über ein auslaßseitig im Bereich der zweiten Kopplungszone einmündendes, insb. zum ersten Verbindungsrohrstück 11 im wesentlichen identisches, gerades zweites Verbindungsrohrstück 12 entsprechend an die das Fluid zu- bzw. abführende - hier nicht dargestellte - Prozeßleitung angeschlossen, wobei ein Einlaßende des einlaßseitigen Verbindungsrohrstück 11 praktisch das Einlaßende des Meßwandlers und ein Auslaßende des auslaßseitigen Verbindungsrohrstück 12 das Auslaßende des Meßwandlers bilden. In vorteilhafter Weise können das Meßrohr 10 und zusammen mit den beiden Verbindungsrohrstücken 11, 12 einstückig ausgeführt sein, so daß zu deren Herstellung z.B. ein einziges rohrförmiges Halbzeug aus einem für solche Meßwandler üblichen Material, wie z.B. Edelstahl, Titan, Zirkonium, Tantal oder entsprechenden Legierungen davon, dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Im in den Fig. 2 und 3 gezeigten Ausführungsbeispiel ist ferner vorgesehen, daß die beiden Verbindungsrohrstücke 11, 12, so zueinander sowie zu einer die beiden Kopplungszonen 11#, 12# imaginär verbindenden gedachten Längsachse L des Meßwandlers ausgerichtet sind, daß das hier mittels Gegenschwinger und Meßrohr gebildete Innenteil, einhergehend mit Verdrillungen der beiden Verbindungsrohrstücke 11, 12, um die Längsachse L pendeln kann. Dafür sind die beiden Verbindungsrohrstücke 11, 12 so zueinander auszurichten, daß die im wesentlichen geraden Rohrsegmente im wesentlichen parallel zur gedachten Längsachse L bzw. zur gedachten Schwingungsachse der Biegeschwingungen des Meßrohrs verlaufen daß die Rohrsegmente sowohl zur Längsachse L als auch zueinander im wesentlichen fluchten. Da die beiden Verbindungsrohrstücke 11, 12 im hier gezeigten Ausführungsbeispiel praktisch über ihre gesamte Länge hinweg im wesentlichen gerade ausgeführt sind, sind sie dementsprechend insgesamt zueinander sowie zur imaginären Längsachse L im wesentlichen fluchtend ausgerichtet. Wie aus den Fig. 2 und 3 weiterhin ersichtlich, ist das, insb. im Vergleich zum Meßrohr 10 biege- und torsionssteifes, Meßwandlergehäuse 100, insb. starr, an einem bezüglich der ersten Kopplungszone distalen Einlaßende des einlaßseitigen Verbindungsrohrstücks 11 sowie an einem bezüglich der ersten Kopplungszone distalen Auslaßende des auslaßseitigen Verbindungsrohrstück 12 fixiert. Insoweit ist also das gesamte - hier mittels Meßrohr 10 und Gegenschwinger 20 gebildete - Innenteil nicht nur vom Meßwandlergehäuse 100 vollständig umhüllt, sondern infolge seiner Eigenmasse und der Federwirkung beider Verbindungsrohrstücke 11, 12 im Meßwandler-Gehäuse 100 auch schwingfähig gehaltert.

Für den typischen Fall, daß der Meßwandler MW lösbaren mit der, beispielsweise als metallische Rohrleitung ausgebildeten, Prozeßleitung zu montieren ist, sind einlaßseitig des Meßwandlers einer erster Anschlußflansch 13 für den Anschluß an ein Fluid dem Meßwandler zuführendes Leitungssegment der Prozeßleitung und auslaßseitig ein zweiter Anschlußflansch 14 für ein Fluid vom Meßwandler abführendes Leitungssegment der Prozeßleitung vorgesehen. Die Anschlußflansche 13, 14 können dabei, wie bei Meßwandlern der beschriebenen Art durchaus üblich auch endseitig in das Meßwandlergehäuse 100 integriert sein. Falls erforderlich können die Verbindungsrohrstücke 11, 12 im übrigen aber auch direkt mit der Prozeßleitung, z.B. mittels Schweißen oder Hartlötung, verbunden werden. Im in Fig. 2 und 3 gezeigten Ausführungsbeispiel sind der erste Anschlußflansch 13 dem einlaßseitigen Verbindungsrohrstück 11 an dessen Einlaßende und der zweite Anschlußflansch 14 dem auslaßseitigen Verbindungsrohrstück 12 an dessen Auslaßende angeformt, während im in Fig. 4 und 5 gezeigten Ausführungsbeispiel die Anschlußflansche entsprechend mit den zugehörigen Strömungsteilern entsprechend verbunden sind.

Zum aktiven Anregen mechanischer Schwingungen des wenigstens einen Meßrohrs (bzw. der Meßrohre), insb. auf einer oder mehreren von dessen natürlichen Eigenfrequenzen, umfaßt jeder der in den Fig. 4 bis 7 gezeigten Meßwandler ferner eine elektromechanische, insb. elektrodynamische, also mittels Tauchankerspulen gebildete, Erregeranordnung 40. Diese dient - angesteuert von einem von der Treiber-Schaltung der Umformer-Elektronik gelieferten und, gegebenenfalls im Zusammenspiel mit der Meß- und Auswerte-Schaltung, entsprechend konditionierten Erregersignal, z.B. mit einem geregelten Strom und/oder einer geregelten Spannung -jeweils dazu, mittels der Treiber-Schaltung eingespeiste elektrische Erregerenergie bzw. - leistung $E_{exc}$ in eine auf das wenigstens eine Meßrohr 10, z.B. pulsförmig oder harmonisch, einwirkende und dieses in der vorbeschriebenen Weise auslenkende Erregerkraft $F_{exc}$ umzuwandeln. Die Erregerkraft $F_{exc}$ kann, wie bei derartigen Meßwandlern üblich, bidirektional oder unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung 40 kann z.B. eine in konventioneller Weise mittels eines - beispielsweise einzigen - mittig, also im Bereich einer halben Nutzschwinglänge, am jeweiligen Meßrohr angreifenden, elektrodynamischen Schwingungserregers 41 gebildete Erregeranordnung 40 dienen. Der Schwingungserreger 41 kann im Falle eines mittels Gegenschwinger und Meßrohr gebildeten Innenteils, wie in der Fig. 4 angedeutet, beispielsweise mittels einer am Gegenschwinger 20 befestigten zylindrischen Erregerspule, die im Betrieb von einem entsprechenden Erregerstrom durchflossen und damit einhergehend von einem entsprechenden Magnetfeld durchflutet ist, sowie einem in die Erregerspule zumindest teilweise eintauchenden dauermagnetischen Anker, der von außen, insb. mittig, am Meßrohr 10 fixiert ist, gebildet sein. Weitere - durchaus auch für das erfindungsgemäße Meßsystem geeignete - Erregeranordnungen für Schwingungen des wenigstens einen Meßrohrs sind z.B. in den eingangs erwähnten US-A 57 05 754, US-A 55 31 126, US-B 62 23 605, US-B 66 66 098 oder US-B 73 60 451 gezeigt.

Nach einer weiteren Ausgestaltung der Erfindung ist das wenigstens eine Meßrohr 10 im Betrieb mittels der vom Erregersignal angesteuerten, mithin gespeisten Erregeranordnung zumindest zeitweise in einem Nutzmode aktiv angeregt, in dem es, insb. überwiegend oder ausschließlich, Biegeschwingungen um die dem Meßrohr innwewohnende statische Ruhelage, mithin die erwähnte gedachte Schwingungsachse, ausführt, beispielsweise überwiegend mit genau einer natürlichen Eigenfrequenz (Resonanzfrequenz) des jeweiligen bzw. des damit jeweils gebildeten Innenteils des Meßwandlers, wie etwa jener, die einem nämlichem Meßrohr bzw. dem damit gebildeten Innenteil innewohnende natürlichen Biegeschwingungsgrundmode entspricht, in dem das wenigstens eine Meßrohr über seine Nutzschwinglänge genau einen Schwingungsbauch aufweist. Im besonderen ist hierbei ferner vorgesehen, daß das wenigstens eine Meßrohr 10, wie bei derartigen Meßwandlern mit gekrümmtem Meßrohr durchaus üblich, mittels der Erregeranordnung zu Biegeschwingungen bei einer Erregerfrequenz $f_{exc}$, so angeregt ist, daß es sich im Nutzmode, um die erwähnte gedachte Schwingungsachse - etwa nach Art eines einseitig eingespannten Auslegers - oszillierend, zumindest anteilig gemäß einer seiner natürlichen Biegeschwingungsformen ausbiegt. Die Biegeschwingungen des Meßrohrs weisen dabei im Bereich der das einlaßseitige Meßrohrende 11# definierenden einlaßseitigen Kopplungszone einen einlaßseitigen Schwingungsknoten und im Bereich der das auslaßseitige Meßrohrende 12# definierenden auslaßseitigen Kopplungszone einen auslaßseitigen Schwingungsknoten auf, so daß also das Meßrohr sich mit seiner Nutzschwinglänge zwischen diesen beiden Schwingungsknoten im wesentlichen frei schwingend erstreckt. Nach einer weiteren Ausgestaltung der Erfindung ist hierbei ferner vorgesehen, den Nutzmode so zu wählen, nämlich das wenigstens eine Meßrohr so anzuregen, daß dieses über eine Nutzschwingungslänge zumindest anteilig Biegeschwingungen mit einem einzigen Schwingungsbauch und/oder Biegeschwingungen auf einer nämlichem Meßrohr innewohnende momentan minimalen Biegeschwingungsresonanzfrequenz bzw. in einem nämlichem Meßrohr innewohnende natürlichen Biegeschwingungsmode, etwa dem erwähnten Biegeschwingungsgrundmode, ausführt,

Die in der Umformer-Elektronik vorgesehene Treiberschaltung Exc kann dafür z.B. als Phasen-Regelschleife (PLL) ausgebildet sein, die in der dem Fachmann bekannten Weise dazu verwendet wird, eine Erregerfrequenz, $f_{exc}$, des Erregersignals ständig auf die momentane Eigenfrequenz des gewünschten Nutzmodes abzugleichen. Der Aufbau und die Verwendung solcher Phasenregel-Schleifen zum aktiven Anregen von Meßrohren zu Schwingungen auf einer mechanischen Eigenfrequenzen ist z.B. in der US-A 48 01 897 ausführlich beschrieben. Selbstverständlich können auch andere für das Einstellen der Erregerenergie $E_{exc}$ geeignete, dem Fachmann an und für sich bekannte Treiberschaltungen verwendet werden, beispielsweise auch gemäß der dem eingangs erwähnten Stand der Technik, etwa der eingangs erwähnten US-A 47 77 833, US-A 48 01 897, US-A 48 79 911, US-A 50 09 109, US-A 50 24 104, US-A 50 50 439, US-A 58 04 741, US-A 58 69 770, US-A 6073495 oder US-A 63 111 36. Ferner sei hinsichtlich einer Verwendung solcher Treiberschaltungen für Meßwandler vom Vibrationstyp auf die mit Meßumformern der Serie "PROMASS 83" bereitgestellte Umformer-Elektroniken verwiesen, wie sie von der Anmelderin beispielsweise in Verbindung mit Meßwandlern der Serie "PROMASS E", "PROMASS F", "PROMASS H", "PROMASS I", "PROMASS P" oder "PROMASS S" angeboten werden. Deren Treiberschaltung ist beispielsweise jeweils so ausgeführt, daß die lateralen Biegeschwingungen im Nutzmode auf eine konstante, also auch von der Dichte, p, weitgehend unabhängige Amplitude geregelt werden.

Zum Vibrierenlassen des wenigsten einen Meßrohrs 10 wird die Erregeranordnung 40, wie bereits erwähnt, mittels eines gleichfalls oszillierenden Erregersignals von einstellbarer Erregerfrequenz, $f_{exc}$, gespeist, so daß die Erregerspule des - hier einzigen am Meßrohr 10 angreifenden Schwingungserregers - im Betrieb von einem in seiner Amplitude entsprechend geregelten Erregerstrom $i_{exc}$ durchflossen ist, wodurch das zum Bewegen des Meßrohrs erforderliche Magnetfeld erzeugt wird. Das Treiber- oder auch Erregersignal bzw. dessen Erregerstrom $i_{exc}$ kann z.B. harmonisch, mehrfrequent oder auch rechteckförmig sein. Die Erregerfrequenz, $f_{exc}$, des zum Aufrechterhalten der Biegeschwingungen des wenigstens einen Meßrohrs 10 erforderlichen Erregerstrom kann beim im Ausführungsbeispiel gezeigten Meßwandler in vorteilhafter Weise so gewählt und eingestellt sein, daß das lateral schwingende Meßrohr 10 zumindest überwiegend im Biegeschwingungsgrundmode (Biegeschwingungsmodes erster Ordnung), mithin über seine Nutzschwinglänge mit einem einzigen Schwingungsbauch, oszilliert. Demnach ist gemäß einer weiteren Ausgestaltung der Erfindung das Erregersignal $i_{exc}$ - zumindest aber eine hinsichtlich einer Signalleistung und/oder einer Signalspannung dominierende, Biegeschwingungen des Meßrohrs erzwingende Nutz-Signalkomponente nämlichen Erregersignals $i_{exc}$ - so generiert, daß es eine Signalfrequenz aufweist, die einer momentanen Resonanzfrequenz von Biegeschwingungen des Meßrohrs entspricht, beispielsweise einer momentanen Resonanzfrequenz eines Biegeschwingungsmodes erster Ordnung, in dem das wenigstens eine vibrierende Meßrohr über seine Nutzschwinglänge Biegeschwingungen mit genau einem Schwingungsbauch ausführt, so daß das wenigstens eine Meßrohr, angeregt vom wenigstens einen Schwingungserreger 41 im Nutzmode vibrierend, also zumindest anteilig Biegeschwingungen mit einer momentanen Resonanzfrequenz ausführt. Anders gesagt, ist die Erreger- oder auch Nutzmodefrequenz, $f_{exc}$, so eingestellt, daß sie möglichst genau einer Eigenfrequenz von Biegeschwingungen des Meßrohrs 10 im Biegeschwingungsgrundmodes entspricht und dieser mittels des Erregersignals zumindest überwiegend anregt ist. Bei einer Verwendung eines aus Edelstahl, insb. Hastelloy, gefertigten Meßrohrs mit einem Kaliber von 29 mm, einer Wandstärke s von etwa 1,5 mm, einer Nutzschwinglänge von etwa 420 mm und einer gesehnten Länge, gemessen zwischen den beiden Meßrohrenden, von 305 mm, würde die dem Biegeschwingungsgrundmode entsprechende Resonanzfrequenz desselben beispielsweise bei einer Dichte von praktisch Null, z.B. bei lediglich mit Luft gefülltem Meßrohr, in etwa 490 Hz betragen.

Im in den Fig. 4 und 5 gezeigten Ausführungsbeispiel mit mittels Meßrohr und Gegenschwinger gebildeten Innenteils führt das Meßrohr 10 die mittels der Erregeranordnung aktiv angeregten Biegeschwingungen überwiegend relativ zum Gegenschwinger 20 aus, insb. auf einer gemeinsamen Schwingfrequenz zueinander gegenphasig. Im Falle einer gleichzeitig, beispielsweise differentiell, sowohl auf Meßrohr als auch Gegenschwinger wirkenden Erregeranordnung wird dabei zwangsweise auch der Gegenschwinger 20 zu simultanen Auslegerschwingungen angeregt, und zwar so, daß er frequenzgleich, jedoch zumindest anteilig außerphasig, insb. im wesentlichen gegenphasig, zum im Nutzmode schwingenden Meßrohr 10 oszilliert. Im besonderen sind Meßrohr 10 und Gegenschwinger 20 dabei ferner so aufeinander abgestimmt bzw. so angeregt, daß sie im Betrieb zumindest zeitweise und zumindest anteilig gegengleiche, also gleichfrequente, jedoch im wesentlichen gegenphasige, Biegeschwingungen um die Längsachse L ausführen. Die Biegeschwingungen können dabei so ausgebildete sein, daß sie von gleicher modaler Ordnung und somit zumindest bei ruhendem Fluid im wesentlichen gleichförmig sind; im anderen Fall der Verwendung zweier Meßrohre sind diese, wie bei Meßwandlern der in Rede stehenden Art üblich, mittels der, insb. differentiell zwischen beiden Meßrohre 10, 10' wirkenden, Erregeranordnung aktiv so angeregt, daß sie im Betrieb zumindest zeitweise gegengleiche Biegeschwingungen um die Längsachse L ausführen. Anders gesagt, die beiden Meßrohre 10, 10' bzw. Meßrohr 10 und Gegenschwinger 20 bewegen sich dann jeweils nach der Art von gegeneinander schwingenden Stimmgabelzinken. Für diesen Fall ist gemäß einer weiteren Ausgestaltung der Erfindung der wenigstens einen elektro-mechanischen Schwingungserreger dafür ausgelegt, gegengleiche Vibrationen des ersten Meßrohrs und des zweiten Meßrohrs, insb. Biegeschwingungen jedes der Meßrohre um eine das jeweilige erste Meßrohrende und das jeweilige zweite Meßrohrende imaginär verbindende gedachte Schwingungsachse, anzuregen bzw. aufrechtzuerhalten.

Für den betriebsmäßig vorgesehenen Fall, daß das Fluid in der Prozeßleitung strömt und somit der Massedurchfluß m von Null verschieden ist, werden mittels des in oben beschriebener Weise vibrierenden Meßrohrs 10 im hindurchströmenden Fluid auch Corioliskräfte induziert. Diese wiederum wirken auf das Meßrohr 10 zurück und bewirken so eine zusätzliche, sensorisch erfaßbare Verformung desselben, und zwar im wesentlichen gemäß einer weiteren natürlichen Eigenschwingungsform von höherer modaler Ordnung als der Nutzmode. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß m abhängig. Als Coriolismode kann, wie bei derartigen Meßwandlern mit gekrümmtem Meßrohr üblich, z.B. die Eigenschwingungsform des anti-symmetrischen Twistmodes dienen, also jene, bei der das Meßrohr 10, wie bereits erwähnt, auch Drehschwingungen um eine senkrecht zur Biegschwingungsachse ausgerichteten gedachten Drehschwingungsachse ausführt, die die Mittelinie des Meßrohrs 10 im Bereich der halben Schwingungslänge imaginär schneidet.

Zum Erfassen von Schwingungen, insb. Biegeschwingungen, des wenigstens einen Meßrohrs 10, beispielsweise auch denen im Coriolismode, weist der Meßwandler ferner jeweils eine entsprechende Sensoranordnung 50 auf. Diese umfaßt, wie auch in den Fig. 4 bis 7 schematische dargestellt, einen - hier vom wenigstens einen Schwingungserreger beabstandet - am wenigstens einen Meßrohr 10 angeordneten, beispielsweise elektrodynamischen, ersten Schwingungssensor 51, der ein Vibrationen des Meßrohrs 10 repräsentierendes, als erstes Schwingungssignal $s_1$ des Meßwandlers dienendes Schwingungsmeßsignal liefert, beispielsweise einer mit den Schwingungen korrespondierende Spannung oder einem mit den Schwingungen korrespondierenden Strom.

Nach einer Weiterbildung der Erfindung weist die Sensoranordnung ferner einen vom ersten Schwingungssensor 52 beabstandet am wenigstens einen Meßrohr 10 angeordneten, insb. elektrodynamischen, zweiten Schwingungssensor 52 auf, der ein ebenfalls Vibrationen des Meßrohrs 10 repräsentierendes, als zweites Schwingungssignal $s_2$ des Meßwandlers dienendes Schwingungsmeßsignal liefert. Eine Länge des sich zwischen den beiden, beispielsweise baugleichen, Schwingungssensoren erstreckenden, insb. im wesentlichen freischwingend vibrierenden, Bereichs des zugehörigen wenigstens einen Meßrohrs entspricht hierbei einer Meßlänge des jeweiligen Meßwandlers. Jedes der - hier zwei, typischerweise breitbandigen - Schwingungssignale $s_1$, $s_2$ des Meßwandlers MW weist dabei jeweils eine mit dem Nutzmode korrespondierende Signalkomponente mit einer der momentanen Schwingfrequenz, $f_{exc}$, des im aktiv angeregten Nutzmode schwingenden wenigstens einen Meßrohrs 10 entsprechenden Signalfrequenz und einer vom aktuellen Massendurchfluß des im wenigstens einen Meßrohr 10 strömenden Fluid abhängigen Phasenverschiebung relativ zu dem, beispielsweise mittels PLL-Schaltung in Abhängigkeit von einer zwischen wenigstens einem der Schwingungsmeßsignale $s_1$, $s_2$ und dem Erregerstrom in der Erregeranordnung existierenden Phasendifferenz generierten, Erregersignal $i_{exc}$ auf. Selbst im Falle der Verwendung eines eher breitbandigen Erregersignals $i_{exc}$ kann infolge der zumeist sehr hohen Schwingungsgüte des Meßwandlers MW davon ausgegangen werden, daß die mit dem Nutzmode korrespondierende Signalkomponente jedes der Schwingungssignale andere, insb. mit allfälligen externen Störungen korrespondierende und/oder als Rauschen einzustufende, Signalkomponenten überwiegt und insoweit auch zumindest innerhalb eines einer Bandbreite des Nutzmodes entsprechenden Frequenzbereichs dominierend ist.

In den hier gezeigten Ausführungsbeispielen sind jeweils der erste Schwingungssensor 51 einlaßseitig und der zweite Schwingungssensor 52 auslaßseitig am wenigstens einen Meßrohr 10 angeordnet, insb. vom wenigstens einen Schwingungserreger bzw. von der Mitte des Meßrohrs 10 gleichweit beabstandet wie der erste Schwingungssensor. Wie bei derartigen, in als Coriolis-Massendurchfluß-Meßgerät ausgebildeten Meßsystemen verwendeten, Meßwandlern vom Vibrationstyp durchaus üblich, sind der erste Schwingungssensor 51 und der zweite Schwingungssensor 52 gemäß einer Ausgestaltung der Erfindung ferner jeweils auf einer vom Schwingungserreger 41 eingenommenen Seite des Meßrohrs im Meßwandler angeordnet. Desweiteren kann auch der zweite Schwingungssensor 52 auf der vom ersten Schwingungssensor 51 eingenommenen Seite des Meßrohrs im Meßwandler angeordnet sein. Die Schwingungssensoren der Sensoranordnung können in vorteilhafter Weise zudem so ausgebildet sein, daß sie Schwingungssignale gleichen Typs liefern, beispielsweise jeweils eine Signalspannung bzw. einen Signalstrom. Gemäß einer weiteren Ausgestaltung der Erfindung sind sowohl der erste Schwingungssensor als auch der zweite Schwingungssensor ferner jeweils so im Meßwandler MW plaziert, daß jeder der Schwingungssensoren zumindest überwiegend Vibrationen des wenigstens einen Meßrohrs 10 erfaßt. Für den oben beschriebenen Fall, daß das Innenteil mittels eines Meßrohrs und eines mit diesem gekoppelten Gegenschwingers gebildet ist, sind nach einer weiteren Ausgestaltung der Erfindung sowohl der erste Schwingungssensor als auch der zweite Schwingungssensor so ausgebildet und so im Meßwandler plaziert, daß jeder der Schwingungssensoren überwiegend Schwingungen des Meßrohrs relativ zum Gegenschwinger, beispielsweise differentiell, erfassen, daß also sowohl das erste Schwingungssignal $s_1$ als auch das zweite Schwingungssignal $s_2$, insb. gegengleiche, Schwingungsbewegungen des wenigstens einen Meßrohrs 10 relativ zum Gegenschwinger 20 repräsentieren. Für den anderen beschriebenen Fall, daß das Innenteil mittels zweier, insb. im Betrieb gegengleich schwingender, Meßrohre gebildet ist, sind nach einer anderen Ausgestaltung der Erfindung sowohl der erste Schwingungssensor als auch der zweite Schwingungssensor so ausgebildet und so im Meßwandler plaziert, daß jeder der Schwingungssensoren überwiegend Schwingungen des ersten Meßrohrs 10 relativ zum zweiten Meßrohr 10', beispielsweise differentiell, erfassen, daß also sowohl das erste Schwingungssignal $s_1$ als auch das zweite Schwingungssignal $s_2$, insb. gegengleiche, Schwingungsbewegungen der zwei Meßrohre relativ zueinander repräsentieren, insb. derart daß - wie bei konventionellen Meßwandlern üblich - das mittels des ersten Schwingungssensors erzeugte erste Schwingungssignal einlaßseitige Vibrationen des ersten Meßrohrs relativ zum zweiten Meßrohr und das mittels des zweiten Schwingungssensors erzeugte zweite Schwingungssignal auslaßseitige Vibrationen des ersten Meßrohrs relativ zum zweiten Meßrohr repräsentieren. Gemäß einer weiteren Ausgestaltung der Erfindung ist ferner vorgesehen, daß die Sensoranordnung genau zwei Schwingungssensoren, also zusätzlich zum ersten und zweiten Schwingungssensor keine weiteren Schwingungssensoren, aufweist und insoweit hinsichtlich der verwendeten Komponenten konventionellen Sensoranordnungen für Meßwandler der in Rede stehenden Art entspricht.

Die von der Sensoranordnung gelieferten - hier als erstes bzw. zweites Schwingungssignale dienenden - Schwingungsmeßsignale, die jeweils eine Signalkomponente mit einer momentanen Schwingfrequenz, $f_{exc}$, des im aktiv angeregten Nutzmode schwingenden wenigstens einen Meßrohrs 10 entsprechende Signalfrequenz aufweisen, sind, wie auch in Fig. 3 gezeigt, der Umformer-Elektronik ME und daselbst dann der darin vorgesehenen Meß- und Auswerteschaltung μC zugeführt, wo sie mittels einer entsprechenden Eingangsschaltung FE zunächst vorverarbeitet, insb. vorverstärkt, gefiltert und digitalisiert werden, um anschließend geeignet ausgewertet werden zu können. Als Eingangsschaltung FE wie auch als Meß- und Auswerteschaltung μC können hierbei in herkömmlichen Coriolis-Massedurchfluß-Meßgeräten zwecks Konvertierung der Schwingungssignale verwendete bzw. Ermittlung von Massendurchflußraten und/oder totalisierten Massendurchflüssen etc. bereits eingesetzte und etablierte Schaltungstechnologien angewendet werden, beispielsweise auch solche gemäß den eingangs erwähnten Stand der Technik. Nach einer weiteren Ausgestaltung der Erfindung ist die Meß- und Auswerteschaltung μC dementsprechend auch mittels eines in der Umformer-Elektronik ME vorgesehenen, beispielsweise mittels eines digitalen Signalprozessors (DSP) realisierten, Mikrocomputers und mittels in diesen entsprechend implementierter und darin ablaufender Programm-Codes realisiert. Die Programm-Codes können z.B. in einem nicht-flüchtigen Datenspeicher EEPROM des Mikrocomputers persistent gespeichert sein und beim Starten desselben in einen, z.B. im Mikrocomputer integrierten, flüchtigen Datenspeicher RAM geladen werden. Für derartige Anwendungen geeignete Prozessoren sind z.B. solche vom Typ TMS320VC33, wie sie von der Firma Texas Instruments Inc. am Markt angeboten werden. Es versteht sich dabei praktisch von selbst, daß die Schwingungssignale $s_1$, $s_2$ wie bereits angedeutet, für eine Verarbeitung im Mikrocomputer mittels entsprechender Analog-zu-digital-Wandler A/D der Umformer-Elektronik ME in entsprechende Digitalsignale umzuwandeln sind, vgl. hierzu beispielsweise die eingangs erwähnten US-B 63 11 136 oder US-A 60 73 495 oder auch vorgenannten Meßumformer der Serie "PROMASS 83".

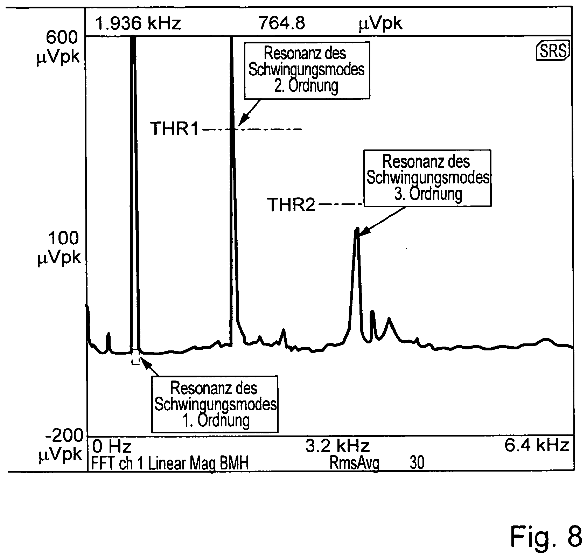

Beim erfindungsgemäßen Meßsystem dient die Umformer-Elektronik ME, wie bereits erwähnt, im besonderen auch dazu, mittels des wenigstens einen Schwingungssignals eine, etwa auch als ein Alarm deklarierte, Kavitationsmeldung $X_{KV}$ zu generieren, die ein Auftreten von zumeist schädlicher bzw. unerwünschter Kavitation im Fluid, beispielsweise visuell und/oder akustisch wahrnehmbar, signalisiert. Die Umformer-Elektronik ME ist dafür eingerichtet die Kavitationsmeldung anhand einer ersten Signalkomponente des nämlichen Schwingungssignals zu erzeugen, die einen Biegeschwingungsmode repräsentiert, in dem das wenigstens eine vibrierende Meßrohr Biegeschwingungen mit wenigstens einem Schwingungsbauch mehr, als bei den Biegeschwingungen im mittels der Erregeranordnung aktive angeregten Nutzmode aufweist, ausführt, im Falle des Verwendens des Biegeschwingungsgrundmodes als Nutzmode also Biegeschwingungen mit wenigstens zwei Schwingungsbäuchen. Beispielsweise kann also die Signalfrequenz des Erregersignal $i_{exc}$ bzw. von dessen der Nutz-Signalkomponente einer momentanen Resonanzfrequenz des erwähnten Biegeschwingungsmodes erster Ordnung, in dem das wenigstens eine vibrierende Meßrohr über seine Nutzschwinglänge Biegeschwingungen mit genau einem Schwingungsbauch ausführt, entsprechen, und kann die erste Signalkomponente des Schwingungssignals, wie in Fig. 8 anhand eines bei im strömenden Fluid auftretender Kavitation experimentell ermittelten Spektrums für das Schwingungssignal dargestellt, eine Signalfrequenz aufweisen, die größer ist als die der momentanen Resonanzfrequenz des Biegeschwingungsmodes erster Ordnung entsprechende Signalfrequenz des Erregersignals, beispielsweise einer momentanen Resonanzfrequenz eines dem Meßrohr innewohnenden natürlichen Biegeschwingungsmode entsprechen, in dem das Meßrohr Biegeschwingungen mit genau einem Schwingungsbauch mehr als bei den Biegeschwingungen im Nutzmode ausführt. Bei letzterem natürlichen Biegeschwingungsmode kann es sich somit beispielsweise um einen natürlichen Biegeschwingungsmodes (Biegeschwingungsmode zweiter Ordnung), in dem das wenigstens eine vibrierende Meßrohr über seine Nutzschwinglänge Biegeschwingungen mit genau zwei Schwingungsbäuchen ausführt, mithin also den Coriolismode handeln. Nach der Erfindung ist die Umformer-Elektronik ME hierbei so eingerichtet, daß sie die Kavitationsmeldung allerdings nur dann generiert, wenn ein Betrag einer Signalspannung der ersten Signalkomponente des Schwingungssignals einen dafür vorgegebenen, etwa in der Umformer-Elektronik gespeicherten und/oder im Betrieb, durch entsprechende Eingabe durch den Anwender veränderbaren, Schwellenwert THR1 überschreitet.

Nach der Erfindung die Umformer-Elektronik ME generiert die Kavitationsmeldung zudem auch mittels einer zweiten Signalkomponente des Schwingungssignals, die einen Biegeschwingungsmode repräsentiert, in dem das wenigstens eine vibrierende Meßrohr Biegeschwingungen mit wenigstens einem Schwingungsbauch mehr als bei dem durch die erste Signalkomponente repräsentierten Biegeschwingungsmode ausführt, beispielsweise also mit drei oder mehr Schwingungsbäuchen. Nicht zuletzt für den erwähnten im Fall, daß die erste Signalkomponente bereits Biegeschwingungen im zweiten Biegeschwingungsgrundmode, nämlich auf dessen momentanen Eigenfrequenz, repräsentiert kann die zweite Signalkomponente des Schwingungssignals beispielsweise also eine Signalfrequenz aufweisen, mithin kann als zweite Signalkomponente jener spektrale Komponente des Schwingungssignal verwendet werden, die einer momentanen Resonanzfrequenz jenes Biegeschwingungsmodes dritter Ordnung entspricht, in dem das wenigstens eine vibrierende Meßrohr Biegeschwingungen mit genau zwei Schwingungsbäuchen mehr als bei den Biegeschwingungen im Nutzmode ausführt. Erfindungsgemäß ist hierbei vorgesehen bzw. ist die Umformer-Elektronik ME so eingerichtet, daß die Kavitationsmeldung nur von der Umformer-Elektronik ME dann generiert wird, wenn der Betrag einer Signalspannung der zweiten Signalkomponente des Schwingungssignals einen dafür vorgegebenen, beispielsweise wiederum im Betrieb veränderbaren und/oder von einer momentanen Signalspannung der ersten Signalkomponente des Schwingungssignals abhängigen, Schwellenwert THR2 nicht überschreitet. Für die in der Fig. 8 gezeigten Daten zugrundeliegende Meßaufnehmerkonfiguration konnte ferner festgestellt werden, daß der der Schwellenwert THR1 für den Betrag der Signalspannung der ersten Signalkomponente des Schwingungssignals in vorteilhafter Weise, nicht zuletzt auch zwecks Vermeidung von allfälligen Fehlalarmen, so gewählt werden sollte, ggf. auch durch entsprechende wiederkehrende Adaption im Betrieb des Meßsystems, daß er, beispielsweise um mehr als das Doppelte, größer als ein momentaner Betrag der Signalspannung der zweiten Signalkomponente des Schwingungssignals ist, bzw. daß der Schwellenwert THR1 für den Betrag der Signalspannung der ersten Signalkomponente des Schwingungssignals und der Schwellenwert THR2 für den Betrag der Signalspannung der zweiten Signalkomponente des Schwingungssignals so gewählt sein sollten, daß ein Schwellenwerte-Verhältnis, definiert durch ein Verhältnis des Schwellenwerts für den Betrag der Signalspannung der ersten Signalkomponente des Schwingungssignals zum Schwellenwert für den Betrag der Signalspannung der zweiten Signalkomponente des Schwingungssignals größer als eins, beispielsweise also größer als zwei ist. In Ergänzung kann die Umformer-Elektronik ME beispielsweise auch so eingerichtet sein, daß sie die Kavitationsmeldung nur dann generiert, wenn ein Signalspannungen-Verhältnis, definiert durch ein Verhältnis eines Betrag einer Signalspannung der ersten Signalkomponente des Schwingungssignals zu einem Betrag einer Signalspannung der zweiten Signalkomponente des Schwingungssignals, einen für nämliches Signalspannungen-Verhältnis vorgegebenen, etwa wiederum im Betrieb veränderbaren und/oder von einer momentanen Signalspannung der ersten Signalkomponente des Schwingungssignals abhängigen und/oder von einer momentanen Signalspannung der zweiten Signalkomponente des Schwingungssignals abhängigen, Schwellenwert überschreitet. Nämlicher Schwellenwert für das Signalspannungen-Verhältnis kann in entsprechender Weise wiederum größer als eins, mithin größer als zwei, gewählt sein.

Da das Auftreten von Kavitation in nicht zuletzt auch durch den Meßwandler selbst bzw. einen damit im strömenden Fluid provozierten Druckabfall verursacht sein kann, ist die Umformer-Elektronik gemäß einer weiteren Ausgestaltung der Erfindung dazu weiter eingerichtet, wie auch in den eigenen, nicht vorveröffentlichten deutschen Patentanmeldungen DE102010000759.5, DE102010000760.9 bzw. DE102010000761.7 vorgeschlagen, mittels des ersten Schwingungssignals und/oder mittels des Erregersignals sowie unter Verwendung eines, beispielsweise im in der Umformer-Elektronik vorgesehenen flüchtigen Datenspeicher RAM vorgehaltenen, ersten Druck-Meßwerts $X_{p1}$, der einen, beispielsweise stromaufwärts des Einlaßendes des Meßwandlers oder stromabwärts des Auslaßendes des Meßwandlers, im strömenden Fluid herrschenden, insb. statischen, ersten Druck, $p_{Ref}$, repräsentiert, einen von diesem Druck-Meßwert $X_{p1}$ verschiedenen zweiten Druck-Meßwert $X_{p2}$ zu generieren, der einen im strömenden Fluid herrschenden statischen zweiten Druck, $p_{krit}$, repräsentiert. Bei dem vom ersten Druck-Meßwert repräsentierten Druck, $p_{Ref}$, kann es sich beispielsweise um einen mittels einer das strömende Fluid fördernden, entsprechend gesteuerten Pumpe eingeprägten und/oder mittels eines enstprechend gesteuerten Ventils eingestellten statischen Druck einlaßseitig oder auslaßseitig des Meßwandlers handeln, während der durch den zweiten Druck-Meßwert $X_{p2}$ repräsentierten Druck beispielsweise ein innerhalb des durch den Meßwandler strömenden Fluid herrschenden minimaler bzw. ein stromabwärts des Einlaßendes des Meßwandlers auftretender, für das Meßsystem insgesamt als kritisch eingestuften statischen Druck sein kann. Der erste Druck-Meßwerts $X_{p1}$ kann demnach sehr einfach dadurch ermittelt werden, indem beispielsweise im Betrieb vom erwähnten übergeordneten Datenverarbeitungssystem aus an die Umformer-Elektronik und/oder von einem direkt an die Umformer-Elektronik angeschlossenen, insoweit mit zum Meßsystem zugehörigen Drucksensor an diese übermittelt und daselbst im erwähnten flüchtigen Datenspeicher RAM und/oder im nichtflüchtigen Datenspeicher EEPROM gespeichert werden.

Daher umfaßt das Meßsystem gemäß einer Weiterbildung ferner einen im Betrieb mit der Umformer-Elektronik, beispielsweise über eine direkte Punkt-zu-Punkt Verbindung und/oder drahtlos per Funk, kommunizierenden Drucksensor zum Erfassen eines, beispielsweise stromaufwärts des Einlaßendes des Meßwandlers oder stromabwärts des Auslaßendes des Meßwandlers, im in einer das Fluid führenden Rohrleitung herrschenden statischen Drucks. Alternativ oder in Ergänzung dazu kann der Druck-Meßwert $X_{p1}$ aber auch, beispielsweise unter Anwendung von u.a. aus den eingangs erwähnten US-B 68 68 740, US-A 57 34 112, US-A 55 76 500, US-A 2008/0034893 oder WO-A 95/29386, WO-A 95/16897 bekannten Druckmeßverfahren, mittels der Umformer-Elektronik direkt anhand wenigstens eines der Schwingungssignale des Meßwandlers ermittelt werden. Gemäß einer weiteren Ausgestaltung der Erfindung ist die Umformer-Elektronik ferner dafür vorgesehen, basierend auf dem ermittelten zweiten Druck-Meßwert $X_{p2}$ das Meßsystem bzw. ein daran angeschlossenes Rohrleitungssystem auf für den Betrieb kritische Zustände hin zu überwachen, etwa das Ausmaß eines durch den Meßwandler selbst zwangsläufig provozierten Druckabfalls im strömenden Fluid und/oder das damit einhergehende Risiko von Kavitation im strömenden Fluid infolge einer zu hohen Druckabsenkung. Dem Rechnung tragend ist gemäß einer weiteren Ausgestaltung der Erfindung die Umformer-Elektronik ferner dafür ausgelegt, die Kavitationsmeldung auch unter Verwendung des zweiten Druck-Meßwerts $X_{p2}$ zu generieren, etwa derart, daß die Funktionalität der Umformer-Elektronik die Kavitationsmeldung zu generieren, erst bei Überschreiten eines maximal zulässigen Druckabfalls aktiviert wird, mithin also die Kavitationsmeldung erst für nämliche Situation gerneriert werden kann, und/oder derart, daß bei Unterschreiten eines maximal zulässigen Druckabfalls die Funktionalität der Umformer-Elektronik die Kavitationsmeldung zu generieren insoweit deaktiviert wird, daß die Kavitationsmeldung auch nicht generiert wird, obwohl die erste Signalkomponente dies zunächst bedingen würde. Alternativ oder n Ergänzung dazu kann die Umformer-Elektronik ferner dafür eingerichtet sein, einen Alarm zu generieren, der einen zu niedrigen statischen Druck im strömenden Fluid und/oder ein Unterschreiten eines vorab definierten, minimal zulässigen statischen Drucks im Fluid und/oder der ein, z.B. sich erst anbahnendes, Auftreten von Kavitation im Fluid geeignet signalisiert, beispielsweise im Umfeld des Meßsystems visuell und/oder akustisch wahrnehmbar. Der Alarm kann z.B. durch das erwähnte Anzeige- und Bedienelement HMI vor Ort zur Anzeige und/oder von einem mittels des Meßsystems gesteuerten Signalhorns zu Gehör gebracht werden.

Zum Erzeugen des zweiten Druck-Meßwerts $X_2$ ist gemäß einer weiteren Ausgestaltung der Erfindung vorgesehen, daß die Umformer-Elektronik unter Verwendung wenigstens eines vom Meßwandler gelieferten Schwingungsmeßsignals und/oder anhand des Erregersignals einen Druckdifferenz-Meßwerts $X_{\Delta p}$ ermittelt, der einen von der Strömung im Meßwandler bestimmten Druckabfall bzw. eine zwischen zwei vorgegebenen Referenzpunkten im strömenden Fluid auftretende Druckdifferenz repräsentiert, beispielsweise derart, daß ein erster der beiden Referenzpunkte einlaßseitig im Meßwandler und ein zweiter der beiden Referenzpunkte auslaßseitig im Meßwandler lokalisiert sind und insoweit eine über dem Meßwandler insgesamt abfallende Druckdifferenz, $\Delta p_{total}$, ermittelt wird. Alternativ dazu kann der zweite Referenzpunkt aber auch so gesetzt sein, daß er unmittelbar in einem Bereich von erwartungsgemäß minimalem statischem Druck im Meßwandler, also einem Bereich von erhöhtem Kavitationsrisiko eingerichtet ist.

Anhand des Druckdifferenz-Meßwerts sowie des intern vorgehaltenen ersten Druck-Meßwerts $X_{p1}$ kann mittels der Umformer-Elektronik der zweite Druck-Meßwert $X_{p2}$, beispielsweise mittels der Funktion: $X_{p2} = X_{p1} - X_{\Delta p}$ generiert werden. Für den Fall, daß der erste Druck-Meßwert $X_{p1}$ nicht genau jenen Druck im Fluid repräsentiert, der einem der beiden, dem Druckdifferenz-Meßwert zugrundeliegenden Referenzpunkten entspricht, etwa weil der den Druck-Meßwert

$X_{p1}$ liefernde Drucksensor bzw. weil die den Druck-Meßwert $X_{p1}$ liefernde Pumpe mit Steuerung vom Einlaßende des Meßwandlers weiter entfernt ist, ist der Druck-Meßwert $X_{p1}$ selbstverständlich auf den Referenzpunkt entsprechend umzurechnen, etwa durch entsprechenden Abzug bzw. Zuschlag eines zwischen der mit dem Druck-Meßwert $X_{p1}$ korrespondierenden Meßstelle und dem durch die Kalibration des Meßsystems definierten Referenzpunkt auftretenden bekannten Druckabfalls. Der Druckdifferenz-Meßwert kann desweiteren auch dafür verwendet werden, den Meßwandler bzw. dessen druckabsenkenden Einfluß auf die Strömung im Betrieb zu überwachen. Daher ist die Umformer-Elektronik nach einer weiteren Ausgestaltung dafür ausgelegt, unter Verwendung des Druckdifferenz-Meßwerts ggf. einen Alarm zu generieren, der ein Überschreiten einer vorab definierten maximal zulässigen Absenkung eines statischen Drucks im durch den Meßwandler strömenden Fluid und/oder einen durch den Meßwandler provozierten, zu hohen Druckabfall, $\Delta p_{total}$, im Fluid entsprechend signalisiert, etwa in vor Ort visuell und/oder akustisch wahrnehmbarer Weise.

Der Druckdifferenz-Meßwert $X_{\Delta p}$ selbst kann beispielsweise gemäß den in US-B 73 05 892 bzw. der US-B 71 34 348 beschriebenen mittels eines Meßwandlers vom Vibrationstyp durchführbaren Verfahren zur Messung einer Druckdifferenz ermittelt werden, etwa derart, daß ein als Druckdifferenz-Meßwert verwendbarer Druckabfall anhand einer Schwingungsantwort des wenigstens einen Meßrohrs auf eine multimodale Schwingungserregung sowie in der Umformer-Elektronik hinterlegter physikalisch-mathematisch Modelle für eine Dynamik des - hier als Coriolis-Massendurchfluß-Meßgerät ausgebildeten - Meßsystems im durch den Meßwandler strömenden Fluid ermittelt wird. Alternativ oder in Ergänzung dazu und mittels des zweiten Schwingungssignals sowie unter Berücksichtigung einer für das strömende Fluid ermittelten Reynoldszahl eine zwischen zwei vorgegebenen, beispielsweise auch innerhalb des Meßwandlers lokalisierten, Referenzpunkten im strömenden Fluid auftretende Druckdifferenz zu messen, wie z.B. einen seitens des Meßwandlers selbst im strömenden Fluid provozierten Druckabfall. Dafür generiert die Umformer-Elektronik mittels des ersten und zweiten Schwingungssignals sowie unter Verwendung eines intern, etwa im flüchtigen Datenspeicher RAM, vorgehaltenen Reynoldszahl-Meßwerts $X_{Re}$, der eine Reynoldszahl, Re, für im Meßwandler strömendes Fluid repräsentiert. Der Reynoldszahl-Meßwert $X_{Re}$ kann beispielsweise im Betrieb mittels des Erregersignals und/oder mittels wenigstens eines der Schwingungssignale generiert werden, beispielsweise nach einem der in der eingangs erwähnten US-B 65 13 393 beschriebenen Verfahren direkt in der Umformer-Elektronik ME. Alternativ oder in Ergänzung dazu kann der Reynoldszahl-Meßwert $X_{Re}$ aber beispielsweise auch vom erwähnten elektronischen Datenverarbeitungssystem an die Umformer-Elektronik ME übermittelt werden.

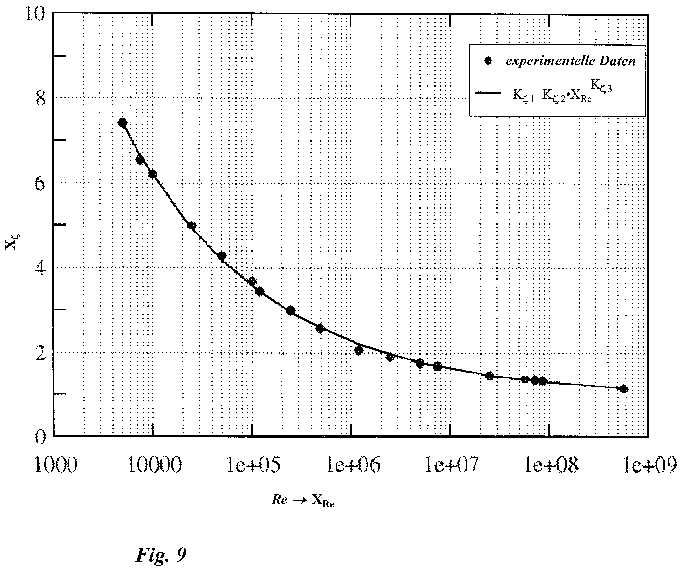

Gemäß einer weiteren Ausgestaltung der Erfindung ermittelt die Umformer-Elektronik den Druckdifferenz-Meßwert unter Verwendung des Reynoldszahl-Meßwerts $X_{Re}$ sowie eines gleichfalls Meßsystem intern, beispielsweise wiederum im flüchtigen Datenspeicher RAM, vorgehaltenen Strömungsenergie-Meßwerts $X_{Ekin}$, der eine von einer Dichte, p, und einer Strömungsgeschwindigkeit, U, des im Meßwandler strömenden Fluids abhängige kinetische Energie, $\rho U^2$, von im Meßwandler strömendem Fluid repräsentiert. Dafür ist in der Umformer-Elektronik ferner ein entsprechender Rechenalgorithmus implementiert, der den Druckdifferenz-Meßwert basierend auf der, in Fig. 9 exemplarisch darge-

$$X_{\Delta p} = \left( K_{\varsigma,1} + K_{\varsigma,2} \cdot X_{Re}^{K_{\varsigma,3}} \right) \cdot X_{Ekin}$$

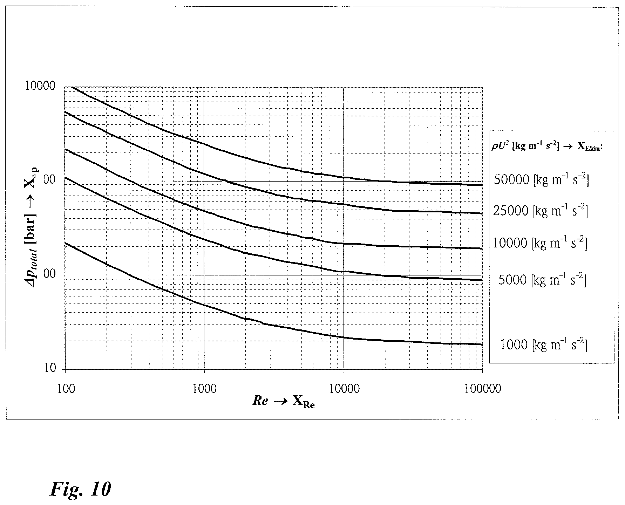

stellten, Beziehung generiert, worin $K_{\varsigma,1}$, $K_{\varsigma,2}$, $K_{\varsigma,3}$, vorab experimentell, etwa im Zuge einer Kalibrierung des Meßsystems und/oder mittels computergestützter Berechnungen, z.B. mittels FEM bzw. CFD, ermittelte, insb. in der Umformer-Elektronik als Festwerte vorgehaltene, Meßsystemparameter sind, die letztlich auch den jeweiligen Ort der der zu ermittelnden Druckdifferenz zugrundeliegenden Referenzpunkte definieren. Die mittels dieser Meßsystemparameter gebildete Funktion, von der ein durch experimentelle Untersuchungen ermitteltes Beispiel in Fig. 10 gezeigt ist, stellt quasi eine zwischen der momentanen bzw. aktuell gültigen Reynoldszahl Re des strömenden Fluids und einem davon abhängigen, auf die momentane kinetische Energie, $\rho U^2$, des im Meßwandler strömenden Fluids bezogenen spezifischen Druckabfall vermittelnde Druckabfall-Kennlinie des Meßsystems dar, deren daraus intern der Umformer-Elektronik generierte, im weiteren als Druckabfall-Koeffizienten $X_\zeta$, bezeichneten Funkti-

$$X_\zeta = K_{\varsigma,1} + K_{\varsigma,2} \cdot X_{Re}^{K_{\varsigma,3}}$$

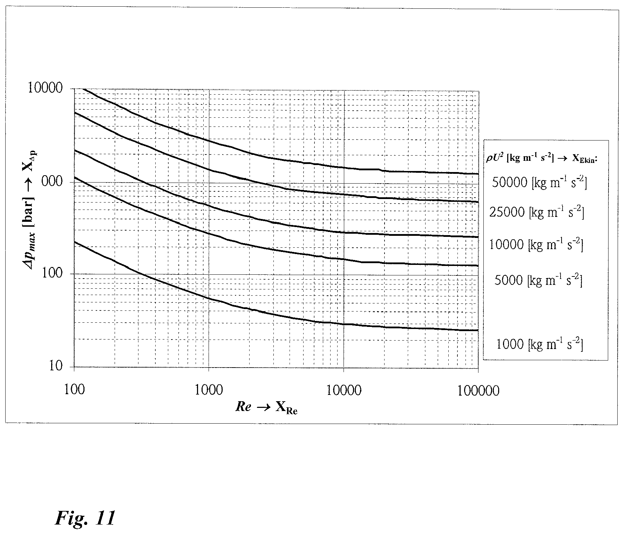

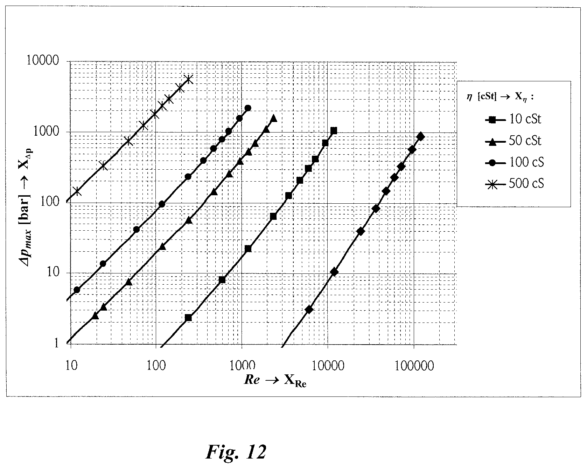

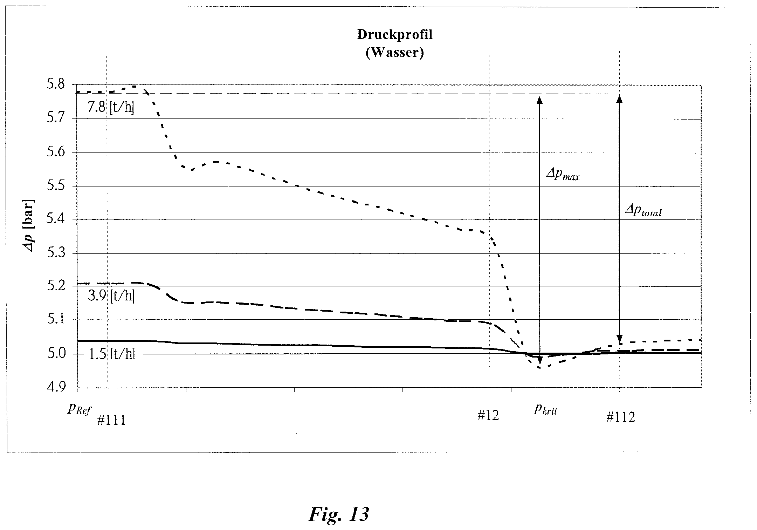

onswerte lediglich von der momentanen Reynoldszahl abhängig sind. Die die Druckabfall-Kennlinie definierenden Meßsystemparameter $K_{\zeta,1}$, $K_{\zeta,2}$, $K_{\zeta,3}$ können beispielsweise so gewählt sein, daß ein erster der Referenzpunkte im - hier durch das erste Gehäuseende des Meßwandler-Gehäuses gebildeten - Einlaßende #111 des Meßwandlers lokalisiert ist, und daß ein zweiter der Referenzpunkte im - hier durch das zweite Gehäuseende des Meßwandler-Gehäuses gebildeten - Auslaßende #112 des Meßwandlers lokalisiert ist, so daß also der Druckdifferenz-Meßwert $X_{\Delta p}$ im Ergebnis eine vom Einlaßende bis hin zum Auslaßende im strömenden Fluid insgesamt auftretende Druckdifferenz, $\Delta p_{total}$, repräsentiert, vgl. Fign. 11, 12 und 13. Die Meßsystemparameter und insoweit die Referenzpunkte können beispielsweise aber auch so gewählt sein, daß der Druckdifferenz-Meßwert $X_{\Delta p}$, wie in Fig. 10 dargestellt, einen maximalen Druckabfall, $\Delta p_{max}$, im innerhalb des Meßwandlers strömenden Fluid unmittelbar repräsentiert. Dieser maximale Druckabfall, $\Delta p_{max}$, tritt bei Meßwandlern der in Rede stehenden Art, wie auch aus den in Fig. 13 exemplarisch für Meßwandler der in Rede stehenden Art dargestellten Druckverlustprofilen ersichtlich, zwischen dem durch das erste Gehäuseende gebildeten Einlaßende #111 des Meßwandlers und einem stromaufwärts des durch das zweiten Gehäuseende gebildeten Auslaßende #112 des Meßwandlers lokalisierten Bereich von erhöhter Turbulenz auf. Für diesen Fall, daß einer der beiden Referenzpunkte, durch entsprechende Wahl der Meßsystemparameter für den Druckabfall-Koeffizienten bzw. die Druckabfall-Kennlinie, an den vorab genau ermittelten Ort minimalen Drucks ($\Delta p = \Delta p_{max}$) innerhalb des im Meßwandler strömenden Fluid, gelegt ist kann also der zweite Druck-Meßwert $X_{p2}$ so ermittelt werden, daß er den minimalen statischen Druck innerhalb des im Meßwandler strömenden Fluids repräsentiert und somit im Betrieb des Meßsystems ohne weiteres festgestellt werden, ob innerhalb des Meßwandlers oder ggf. auch unmittelbar im stromabwärts desselben liegenden Auslaufbereich der angeschlossenen Rohrleitung mit einem unzulässig niedrigen statischen Druck im strömenden Fluid zu rechnen ist.

Unter Berücksichtigung der Druckabfall-Kennlinie bzw. des Druckabfall-Koeffizienten $X_\zeta$ läßt sich der zur Ermittlung des den Druckdifferenz-Meßwerts vorgeschlagene funktionale Zusammenhang desweiteren zu der Beziehung $X_{\Delta p} = X_\zeta \cdot X_{Ekin}$ vereinfachen.

Die Meß- und Auswerteschaltung $\mu$C dient gemäß einer weiteren Ausgestaltung der Erfindung im ferner dazu, zwecks Ermittlung des zweiten Druck-Meßwerts $X_{p2}$, insb. auch zur Ermittlung des dafür benötigten Druckdifferenz-Meßwerts $X_{\Delta p}$ und/oder des dafür benötigten Strömungsenergie-Meßwerts $X_{Ekin}$, und/oder des dafür benötigten Reynoldszahl-Meßwerts $X_{Re}$, unter Verwendung der von der Sensoranordnung 50 gelieferten Schwingungssignale $s_1$, $s_2$, beispielsweise anhand einer zwischen den bei anteilig in Nutz- und Coriolismode schwingendem Meßrohr 10 generierten Schwingungssignalen $s_1$, $s_2$ des ersten und zweiten Schwingungssensors 51, 52 detektierten Phasendifferenz, wiederkehrend einen Massendurchfluß-Meßwert $X_m$ zu ermitteln, der die zu messenden Massendurchflußrate, $\dot{m}$, des durch den Meßwandler geführten Fluids möglichst genau repräsentiert. Dafür erzeugt die Meß- und Auswerte-Schaltung gemäß einer weiteren Ausgestaltung der Erfindung im Betrieb wiederkehrend einen Phasendifferenz-Meßwert $X_{\Delta\varphi}$, der die zwischen dem ersten Schwingungssignal $s_1$ und dem zweiten Schwingungssignal $s_2$ existierenden Phasendifferenz, $\Delta\varphi$, momentan repräsentiert. Die Berechnung des Massendurchfluß-Meßwert $X_m$ kann, unter Verwendung eines gleichfalls in der Umformer-Elektronik vorgehaltenen, eine Schwingungsfrequenz von Vibrationen, beispielsweise den oben erwähnten Biegeschwingungen des wenigstens einen Meßrohrs 10 im Nutzmode, repräsentierenden Frequenz-Meßwerts $X_f$ somit beispielsweise basierend auf dem bekannten Zusammenhang:

$$X_m = K_m \cdot \frac{X_{\Delta\varphi}}{X_f}$$

erfolgen, worin $K_m$ ein vorab experimentell, z.B. im Zuge einer Kalibrierung des Meßsystems und/oder mittels computergestützter Berechnungen, ermittelter, z.B. im nichtflüchtigen Datenspeicher, als Festwerte intern vorgehaltener Meßsystemparameter ist, der zwischen dem hier mittels des Phasendifferenz-Meßwerts $X_{\Delta\varphi}$ und des Frequenz-Meßwerts $X_f$ gebildeten Quotienten und der zu messenden Massendurchflußrate, $\dot{m}$, entsprechend vermittelt. Der Frequenz-Meßwert $X_f$ selbst kann auf einfache Weise z.B. anhand von den von der Sensoranordnung gelieferten Schwingungssignale oder auh anhand des wenigstens einen die Erregeranordnung speisenden Erregersignals in dem Fachmann bekannter Weise ermittelt werden.

Gemäß einer weiteren Ausgestaltung ist ferner vorgesehen, daß die Umformer-Elektronik, beispielsweise im flüchtigen Datenspeicher RAM, einen Dichte-Meßwert $X_\rho$, der eine zu messende Dichte, $\rho$, des Fluids momentan repräsentiert, und/oder einen Viskositäts-Meßwert $X_\eta$, der eine Viskosität des Fluids momentan repräsentiert, vorhält. Basierend auf dem Massendurchfluß-Meßwert $X_m$ und dem Dichte-Meßwert $X_\rho$ kann somit nämlich mittels der Umformer-Elektronik der zur Ermittlung des Druckdifferenz-Meßwerts $X_{\Delta p}$ benötigte Strömungsenergie-Meßwert $X_{Ekin}$ intern er-

$$X_{Ekin} = K_{Ekin} \cdot \frac{(X_m)^2}{X_\rho},$$

mittelt werden, etwa mittels Umsetzung der Beziehung während unter Verwendung des Massendurchfluß-Meßwerts $X_m$ und des Viskositäts-Meßwert $X_\eta$, auf einfache Weise der zur Ermittlung des Druckdifferenz-Meßwerts $X_{\Delta p}$ benötigte Reynoldszahl-Meßwert $X_{Re}$ in der Umformer-Eletronik ermittelt werden kann, etwa ba-

$$X_{Re} = K_{Re} \cdot \frac{X_m}{X_\eta}.$$

sierend auf der Beziehung Die entsprechenden Meßsystemparameter $K_{Ekin}$ bzw. $K_{Re}$ sind im wesentlichen vom effektiven Strömungsquerschnitt des Meßwandlers abhängig und können vorab ohne weiteres, z.B. wiederum im Zuge einer Kalibrierung des Meßsystems und/oder mittels computergestützter Berechnungen, experimentell ermittelt und in der Umformer-Elektronik als meßsystemspezifische Festwerte abgelegt werden.

Unter Berücksichtigung der vorgenannten funktionalen Zusammenhänge kann der Druckdifferenz-Meßwert

$$X_{\Delta p} = X_{\zeta} \cdot K_{Ekin} \cdot \frac{\left(X_m\right)^2}{X_{\rho}},$$

$X_{\Delta p}$ auch basierend auf einer der folgenden Beziehungen ermittelt werden:

$$X_{\Delta p} = \left( K_{\varsigma,1} + K_{\varsigma,2} \cdot X_{Re}^{K_{\varsigma,3}} \right) \cdot K_{Ekin} \cdot \frac{\left(X_m\right)^2}{X_{\rho}},$$

$$X_{\Delta p} = \left[ K_{\varsigma,1} + K_{\varsigma,2} \cdot \left( K_{Re} \cdot \frac{X_m}{X_{\eta}} \right)^{K_{\varsigma,3}} \right] \cdot X_{Ekin},$$

oder

$$X_{\Delta p} = \left[ K_{\varsigma,1} + K_{\varsigma,2} \cdot \left( K_{Re} \cdot \frac{X_m}{X_{\eta}} \right)^{K_{\varsigma,3}} \right] \cdot K_{Ekin} \cdot \frac{\left(X_m\right)^2}{X_{\rho}}.$$

Die vorgenannten, für die für die Ermittlung des Druckdifferenz-Meßwerts benötigten Meßsystemparameter $K_{\varsigma,1}$, $K_{\varsigma,2}$, $K_{\varsigma,3}$ bzw. $K_{Ekin}$ oder $K_{Re}$ jeweils erforderlichen definierten Strömungen mit bekannter Reynoldszahlen, Re, bekannter kinetischer Energie, $\rho U^2$, und bekannter Druckverlaufs können ausreichend präzise auf entsprechenden Kalibrieranlagen ohne weiteres realisiert werden, beispielsweise mittels hinsichtlich der Strömungseigenschaften bekannter Kalibrierfluide, wie z.B. Wasser, Glycerin etc., die mittels entsprechend gesteuerten Pumpen dem jeweils zu kalibrierenden Meßsystem als eingeprägte Strömung zu geführt werden. Alternativ oder in Ergänzung dazu können die für die Ermittlung der Meßsystemparameter benötigten Strömungsparameter, wie die Reynoldszahl, die kinetische Energie, die Druckdifferenz etc., beispielsweise auch mittels eines Druckdifferenz-Meßsystem meßtechnisch ermittelt werden, das zusammen mit dem zu kalibrierenden Meßsystem eines der in der eingangs erwähnten US-B 74 06 878 vorgeschlagenen Meßsysteme bildet und das zum Zwecke einer Naß-Kalibrierung mit Strömungen mit entsprechend variierten Massendurchflußraten, Dichten und Viskositäten beaufschlagt wird.

Unter Verwendung des Druckdifferenz-Meßwerts $X_{\Delta p}$ ist es zudem auch möglich, die in gewissem Maße auch von den Druckverhältnissen im strömenden Fluid beeinflußte Phasendifferenz zwischen den Schwingungssignalen $s_1$, $s_2$ oder auch die ebenfalls beeinflußte Schwingungsfrequenz zwecks Erhöhung der Meßgenauigkeit von Massendurchfluß- und/oder Dichte-Meßwert im Betrieb entsprechend zu korrigieren.

Die Meß- und Auswerte-Schaltung des erfindungsgemäßen Meßsystems dient gemäß einer weiteren Ausgestaltung der Erfindung ferner dazu, abgeleitet von der durch den Frequenz-Meßwert $X_f$ momentan repräsentierten Schwingungsfrequenz in dem Fachmann an und für sich bekannter Weise zusätzlich auch den zur Ermittlung des Druckdifferenz-Meßwerts benötigten Dichte-Meßwert $X_{\rho}$ zu generieren, beispielsweise basierend auf der Beziehung:

$$X_{\rho} = K_{\rho,1} + \frac{K_{\rho,2}}{X_f^2},$$

worin $K_{\rho,1}$, $K_{\rho,2}$, vorab experimentell ermittelte, beispielsweise im nichtflüchtigen Datenspeicher RAM, als Festwerte intern vorgehaltene Meßsystemparameter sind, die zwischen der durch den Frequenz-Meßwert $X_f$ repräsentierten Schwingungsfrequenz und der zu messenden Dichte, p, entsprechend vermitteln.

Alternativ oder in Ergänzung dazu kann die Auswerteschaltung wie bei In-Line-Meßgeräten der in Rede stehenden Art durchaus üblich ggf. auch dazu verwendet werden, den zur Ermittlung des Druckdifferenz-Meßwerts benötigten Viskositäts-Meßwert $X_{\eta}$ zu ermitteln, vgl. hierzu auch die eingangs erwähnten US-B 72 84 449, US-B 70 17 424, US-B 69 10 366, US-B 68 40 109, US-A 55 76 500 oder US-B 66 51 513. Zur Ermittlung der zum Bestimmen der Viskosität erforderlichen Erregerenergie oder Erregerleistung bzw. Dämpfung eignet sich dabei beispielsweise das von Treiberschaltung der Umformer-Elektronik gelieferte Erregersignal, insb. eine Amplitude und Frequenz von dessen den Nutzmode treibender Stromanteil oder auch eine Amplitude des gesamten, ggf. auch auf eine anhand wenigstens eines der Schwingungssignale ermittelte Schwingungsamplitude normierten Erregerstroms. Alternativ oder in Ergänzung dazu kann aber auch ein dem Einstellen des Erregersignals bzw. des Erregerstroms dienendes internes Steuersignal oder, beispielsweise im Falle einer Anregung der Vibrationen des wenigstens einen Meßrohrs mit einem Erregerstrom von fest vorgegebener bzw. auf konstant geregelter Amplitude, auch wenigstens eines der Schwingungssignale, insb. eine Amplitude davon, als ein Maß der für die Ermittlung des Viskositäts-Meßwerts erforderlichen Erregerenergie oder Erregerleistung bzw. Dämpfung dienen.

Die vorgenannten, insb. auch die dem Erzeugen des Druckdifferenz-Meßwerts $X_{\Delta p}$ bzw. anderer der vorgenannten Meßwerte jeweils dienenden, Rechenfunktionen können z.B. mittels des oben erwähnten Mikrocomputers der Auswerte-Schaltung $\mu C$ oder beispielsweise auch einem darin entsprechend vorgesehenen digitalen Signalprozessors DSP sehr einfach realisiert sein. Das Erstellen und Implementieren von entsprechenden Algorithmen, die mit den vorbeschriebenen Formeln korrespondierenden oder beispielsweise auch die Funktionsweise der erwähnten Amplituden- bzw. Frequenzregelschaltung für die Erregeranordnung nachbilden, sowie deren Übersetzung in der Umformer-Elektronik entsprechend ausführbare Programm-Codes ist dem Fachmann an und für sich geläufig und bedarf daher - jedenfalls in Kenntnis der vorliegenden Erfindung - keiner detailierteren Erläuterung. Selbstverständlich können vorgenannte Formeln bzw. andere mit der Umformer-Elektronik realisierte Funktionalitäten des Meßsystems auch ohne weiteres ganz oder teilweise mittels entsprechender diskret aufgebauter und/oder hybriden, also gemischt analog-digitalen, Rechenschaltungen in der Umformer-Elektronik ME realisiert werden.

## Patentansprüche

1.  Meßsystem für, insb. in Rohrleitungen, strömende Fluide, welches Meßsystem umfaßt:

    - einen im Betrieb von einem Fluid, insb. einer Flüssigkeit oder einem anderen fließfähigem, mithin zu Kavitation neigenden Material, durchströmten Meßwandler (MW) vom Vibrationstyp zum Erzeugen von mit Parametern des strömenden Fluids, insb. einer Massendurchflußrate, einer Dichte und/oder einer Viskosität, korrespondierenden Schwingungssignalen sowie eine mit dem Meßwandler elektrisch gekoppelte Umformer-Elektronik (ME) zum Ansteuern des Meßwandlers und zum Auswerten von vom Meßwandler gelieferten Schwingungssignalen,
    - wobei der Meßwandler (MW)

        -- wenigstens ein, insb. V-förmiges, U-förmiges, Z-förmiges oder gerades, Meßrohr (10; 10') zum Führen von strömendem Fluid,
        -- wenigstens einen elektro-mechanischen, insb. elektrodynamischen, Schwingungserreger (41) zum aktiven Anregen und/oder Aufrechterhalten von Biegeschwingungen des wenigstens einen Meßrohrs in einem Nutzmode, insb. derart, daß das wenigstens eine Meßrohrs über eine Nutzschwingungslänge zumindest anteilig Biegeschwingungen mit einem einzigen Schwingungsbauch und/oder Biegeschwingungen auf einer nämlichem Meßrohr innewohnende momentan minimalen Biegeschwingungsresonanzfrequenz und/oder Biegeschwingungen in einem nämlichem Meßrohr innewohnende natürlichen Biegeschwingungsmode ausführt, und
        -- wenigstens einen, insb. elektrodynamischen, Schwingungssensor (51) zum Erfassen von, insb. einlaßseitigen oder auslaßseitigen, Vibrationen des wenigstens einen Meßrohrs und zum Erzeugen eines, insb. einlaßseitige bzw. auslaßseitige, Vibrationen zumindest des wenigstens einen Meßrohrs repräsentierenden Schwingungssignals ($s_1$) des Meßwandlers aufweist; und

    - wobei die Umformer-Elektronik (ME)

        -- sowohl mittels einer ersten Signalkomponente des mittels des wenigstens einen Schwingungssensor (51) erzeugten Schwingungssignals, die einen Biegeschwingungsmode repräsentiert, in dem das wenigstens eine vibrierende Meßrohr Biegeschwingungen mit wenigstens einem Schwingungsbauch mehr als bei den Biegeschwingungen im Nutzmode aufweist, insb. Biegeschwingungen mit wenigstens zwei Schwingungsbäuchen, ausführt,
        -- als auch mittels einer zweiten Signalkomponente des Schwingungssignals generiert, die einen Biegeschwingungsmode repräsentiert, in dem das wenigstens eine vibrierende Meßrohr Biegeschwingungen mit wenigstens einem Schwingungsbauch mehr als bei dem durch die erste Signalkomponente repräsentierten Biegeschwingungsmode, insb. Biegeschwingungen mit wenigstens drei Schwingungsbäuchen, ausführt,

- eine, insb. als ein Alarm deklarierte, Kavitationsmeldung ($X_{KV}$) generiert, die ein Auftreten von Kavitation im Fluid, insb. visuell und/oder akustisch wahrnehmbar, signalisiert, **dadurch gekennzeichnet dass** die Umformer-Elektronik (ME) die Kavitationsmeldung nur dann generiert,

-- wenn ein Betrag einer Signalspannung der ersten Signalkomponente des Schwingungssignals einen dafür vorgegebenen, insb. in der Umformer-Elektronik gespeicherten und/oder im Betrieb veränderbaren, Schwellenwert (THR1) überschreitet

-- und wenn ein Betrag einer Signalspannung der zweiten Signalkomponente des Schwingungssignals einen dafür vorgegebenen, insb. im Betrieb veränderbaren und/oder von einer momentanen Signalspannung der ersten Signalkomponente des Schwingungssignals abhängigen, Schwellenwert (THR2) nicht überschreitet.

2. Meßsystem nach dem vorherigen Anspruch, wobei die Umformer-Elektronik (ME) wenigstens ein Biegeschwingungen des wenigstens einen Meßrohrs bewirkendes Erregersignal ($i_{exc}$) für den wenigstens einen Schwingungserreger (41) liefert.

3. Meßsystem nach dem vorherigen Anspruch, wobei das Erregersignal (iexc) - zumindest aber eine hinsichtlich einer Signalleistung und/oder einer Signalspannung dominierende, Biegeschwingungen des Meßrohrs erzwingende Nutz-Signalkomponente nämlichen Erregersignals (iexc) - eine Signalfrequenz aufweist, die einer momentanen Resonanzfrequenz von Biegeschwingungen des Meßrohrs entspricht, insb. einer momentanen Resonanzfrequenz eines Biegeschwingungsmodes erster Ordnung, in dem das wenigstens eine vibrierende Meßrohr über eine Nutzschwinglänge Biegeschwingungen mit genau einem Schwingungsbauch ausführt, so daß das wenigstens eine Meßrohr, angeregt vom wenigstens einen Schwingungserreger (41) im Nutzmode vibrierend, zumindest anteilig Biegeschwingungen mit einer momentanen Resonanzfrequenz ausführt.

4. Meßsystem nach dem vorherigen Anspruch,

- wobei die Signalfrequenz des Erregersignal (iexc) bzw. der Nutz-Signalkomponente des Erregersignals (iexc) einer momentanen Resonanzfrequenz eines Biegeschwingungsmodes erster Ordnung, in dem das wenigstens eine vibrierende Meßrohr über eine Nutzschwinglänge Biegeschwingungen mit genau einem Schwingungsbauch ausführt, entspricht, und
- wobei die erste Signalkomponente des Schwingungssignals eine Signalfrequenz aufweist, die größer ist als die der momentanen Resonanzfrequenz des Biegeschwingungsmodes erster Ordnung entsprechende Signalfrequenz des Erregersignals.

5. Meßsystem nach einem der vorherigen Ansprüche, wobei die erste Signalkomponente des Schwingungssignals eine Signalfrequenz aufweist, die einer momentanen Resonanzfrequenz eines dem Meßrohr innewohnenden natürlichen Biegeschwingungsmode entspricht, in dem das Meßrohr Biegeschwingungen mit genau einem Schwingungsbauch mehr als bei den Biegeschwingungen im Nutzmode ausführt, insb. einem Biegeschwingungsmodes zweiter Ordnung, in dem das wenigstens eine vibrierende Meßrohr über eine Nutzschwinglänge Biegeschwingungen mit genau zwei Schwingungsbäuchen ausführt und/oder einem infolge von im im Nutzmode vibrierenden Meßrohr strömenden Fluid induzierten Corioliskräften angeregten Coriolismode.

6. Meßsystem nach einem der vorherigen Ansprüche,

- wobei die zweite Signalkomponente des Schwingungssignals einen Biegeschwingungsmode repräsentiert, in dem das wenigstens eine vibrierende Meßrohr Biegeschwingungen mit wenigstens drei Schwingungsbäuchen ausführt; und/oder
- wobei die zweite Signalkomponente des Schwingungssignals eine Signalfrequenz aufweist, die einer momentanen Resonanzfrequenz jenes Biegeschwingungsmodes dritter Ordnung entspricht, in dem das wenigstens eine vibrierende Meßrohr Biegeschwingungen mit genau zwei Schwingungsbäuchen mehr als bei den Biegeschwingungen im Nutzmode ausführt.

7. Meßsystem nach einem der vorherigen Ansprüche,

- wobei der Schwellenwert für den Betrag der Signalspannung der ersten Signalkomponente des Schwingungssignals so gewählt ist, daß er, insb. um mehr als das Doppelte, größer als ein Betrag der Signalspannung der zweiten Signalkomponente des Schwingungssignals ist; und/oder

- wobei der Schwellenwert für den Betrag der Signalspannung der ersten Signalkomponente des Schwingungssignals und der Schwellenwert für den Betrag der Signalspannung der zweiten Signalkomponente des Schwingungssignals so gewählt sind, daß ein Schwellenwerte-Verhältnis, definiert durch ein Verhältnis des Schwellenwerts für den Betrag der Signalspannung der ersten Signalkomponente des Schwingungssignals zum Schwellenwert für den Betrag der Signalspannung der zweiten Signalkomponente des Schwingungssignals größer als eins, insb. größer als zwei ist.

8. Meßsystem nach einem der vorherigen Ansprüche, wobei die Umformer-Elektronik (ME) die Kavitationsmeldung nur dann generiert, wenn ein Signalspannungen-Verhältnis, definiert durch ein Verhältnis eines Betrag einer Signalspannung der ersten Signalkomponente des Schwingungssignals zu einem Betrag einer Signalspannung der zweiten Signalkomponente des Schwingungssignals, einen für nämliches Signalspannungen-Verhältnis vorgegebenen, insb. im Betrieb veränderbaren und/oder von einer momentanen Signalspannung der ersten Signalkomponente des Schwingungssignals abhängigen und/oder von einer momentanen Signalspannung der zweiten Signalkomponente des Schwingungssignals abhängigen, Schwellenwert überschreitet.

9. Meßsystem nach dem vorherigen Anspruch, wobei der Schwellenwert für das Signalspannungen-Verhältnis größer als eins, insb. größer als zwei, gewählt ist.

10. Meßsystem nach einem der vorherigen Ansprüche, wobei die Umformer-Elektronik (ME) die Kavitationsmeldung auch unter Verwendung eines, insb. in einem in der Umformer-Elektronik vorgesehenen flüchtigen Datenspeicher vorgehaltenen, Druck-Meßwerts ($X_{p1}$), der einen, insb. stromaufwärts eines Auslaßendes des Meßwandlers und/oder stromabwärts eines Einlaßendes des Meßwandlers, im strömenden Fluid herrschenden, insb. mittels eines mit der Umformer-Elektronik kommunizierenden Drucksensors gemessenen und/oder mittels Schwingungssignalen des Meßwandlers ermittelten und/oder statischen und/oder mittels einer Pumpe eingestellten, Druck, $p_{Ref}$, repräsentiert.

11. Meßsystem nach einem der vorherigen Ansprüche, das weiters einen im Betrieb mit der Umformer-Elektronik kommunizierenden Drucksensor zum Erfassen eines, insb. stromaufwärts eines Einlaßendes des Meßwandlers oder stromabwärts eines Auslaßendes des Meßwandlers, in einer das Fluid führenden Rohrleitung herrschenden, insb. statischen, Drucks, $p_{Ref}$, umfaßt.

12. Meßsystem nach einem der Ansprüche 2 bis 11, wobei die Umformer-Elektronik mittels des Erregersignals und mittels des Schwingungssignals einen Druckdifferenz-Meßwert ($X_{\Delta p}$) generiert, der eine zwischen zwei vorgegebenen Referenzpunkten im strömenden Fluid auftretende Druckdifferenz repräsentiert, insb. derart, daß ein erster der beiden Referenzpunkte einlaßseitig und/oder ein zweiter der beiden Referenzpunkte auslaßseitig im Meßwandler lokalisiert sind.

13. Meßsystem nach dem vorherigen Anspruch,

- wobei die Umformer-Elektronik die Kavitationsmeldung unter Verwendung des Druckdifferenz-Meßwerts generiert; und/oder
- wobei die Umformer-Elektronik unter Verwendung des Druckdifferenz-Meßwerts einen Alarm generiert, der ein Überschreiten einer vorab definierten, maximal zulässigen Absenkung eines statischen Drucks im durch den Meßwandler strömenden Fluid, insb. visuell und/oder akustisch wahrnehmbar, signalisiert; und/oder
- wobei die Umformer-Elektronik unter Verwendung des Druckdifferenz-Meßwerts einen Alarm generiert, der einen durch den Meßwandler provozierten, zu hohen Druckabfall im Fluid, insb. visuell und/oder akustisch wahrnehmbar, signalisiert; und/oder
- wobei die Umformer-Elektronik den Druckdifferenz-Meßwert unter Verwendung eines, insb. in einem in der Umformer-Elektronik vorgesehenen flüchtigen Datenspeicher vorgehaltenen und/oder mittels des Erregersignal und/oder mittels wenigstens eines vom Meßwandler gelieferten Schwingungssignals erzeugten, Reynoldszahl-Meßwerts ermittelt, der eine Reynoldszahl, Re, für im Meßwandler strömendes Fluid repräsentiert; und/oder
- wobei die Umformer-Elektronik den Druckdifferenz-Meßwert unter Verwendung eines, insb. in einem in der Umformer-Elektronik vorgesehenen flüchtigen Datenspeicher intern vorgehaltenen und/oder im Betrieb mittels des Erregersignal und/oder mittels wenigstens eines der Schwingungssignale erzeugten, Viskositäts-Meßwert ($X_{\eta}$) generiert, der eine Viskosität, $\eta$, von im Meßwandler strömendem Fluid repräsentiert; und/oder
- bei welchem Meßsystem die Umformer-Elektronik zur Ermittlung des Druckdifferenz-Meßwerts einen Druckabfall-Koeffizienten ($X_{\zeta}$) generiert, der einen von der momentanen Reynoldszahl, Re, des strömenden Fluids abhängigen Druckabfall über dem Meßwandler, bezogen auf eine momentane kinetische Energie des im Meßwandler strömenden Fluids repräsentiert, insb. basierend auf der Beziehung:

$$X_\zeta = K_{\varsigma,1} + K_{\varsigma,2} \cdot X_{Re}^{K_{\varsigma,3}},$$

wobei $K_{\zeta,1}$, $K_{\zeta,2}$, $K_{\zeta,3}$, vorab experimentell ermittelte, in der Umformer-Elektronik, insb. in einem in der Umformer-Elektronik vorgesehenen nichtflüchtigen Datenspeicher, als Festwerte vorgehaltene Meßsystemparameter sind.

**Claims**

1. Measuring system for flowing fluid, particularly fluid flowing through pipes, said measuring system comprising:

   - a vibronic-type transducer (MW) through which, during operation, a fluid flows, particularly a liquid or another flowable material with a tendency towards cavitation, said transducer being designed to generate vibration signals corresponding to parameters of the flowing fluid, particularly a mass flow rate, a density and/or a viscosity, as well as transmitter electronics (ME) electrically coupled with the transducer and designed to activate the transducer and evaluate vibration signals supplied by the transducer,
   - wherein the transducer (MW) has

     -- at least one measuring tube (10, 10'), particularly V-shaped, U-shaped, Z-shaped or straight, for conducting flowing fluid,
     -- at least one electromechanical, particularly electrodynamic, vibration exciter (41), designed to actively excite and/or maintain flexural vibrations of the at least one measuring tube in a useful mode, particularly in such a way that the at least one measuring tube executes, at least in part, flexural vibrations with a single antinode over a useful vibration length and/or flexural vibrations at a currently minimal flexural vibration resonance frequency which is inherent to said measuring tube, and/or flexural vibrations in a natural flexural vibration mode inherent to said measuring tube, and
     -- at least one vibration sensor (51), particularly electrodynamic, designed to record vibrations, particularly vibrations on the inlet side or outlet side, of the at least one measuring tube and designed to generate a vibration signal (si) of the transducer that represents vibrations, particularly on the inlet side or outlet side, of the at least one measuring tube; and

   - wherein the transmitter electronics (ME) generate

     -- using both a first signal component of the vibration signal generated by the at least one vibration sensor (51), said component representing a flexural vibration mode in which the at least one vibrating measuring tube executes flexural vibrations with at least one antinode more than in the case of the flexural vibrations in the useful mode, particularly flexural vibrations with at least two antinodes,
     -- and using a second component of the vibration signal, which represents a flexural vibration mode in which the at least one vibrating measuring tube executes flexural vibrations with at least one antinode more than in the case of the flexural vibration mode represented by the first signal component, particularly flexural vibrations with at least three antinodes,

   - a cavitation message ($X_{KV}$), particularly declared as an alarm, said message signaling an occurrence of a cavitation in the fluid, which can be perceived particularly visually and/or acoustically,
   **characterized in that**
   the transmitter electronics (ME) only generate the cavitation message
   - if a value of the signal voltage of the first signal component of the vibration signal exceeds a threshold value (THR1) predefined for this purpose, particularly one saved in the transmitter electronics and/or modifiable during operation
   -- and if a value of the signal voltage of the second signal component of the vibration signal does not exceed a threshold value (THR2) predefined for this purpose, particularly one modifiable during operation and/or dependent on a current signal voltage of the first signal component of the vibration signal.

2. Measuring system as claimed in the previous claim, wherein the transmitter electronics (ME) deliver at least one excitation signal ($i_{exc}$), which causes flexural vibrations of the at least one measuring tube, for the at least one vibration exciter (41).

3. Measuring system as claimed in the previous claim, wherein the excitation signal ($i_{exc}$) - at least a useful signal component of said excitation signal ($i_{exc}$) which dominates with regard to a signal power and/or a signal voltage and generates flexural vibrations of the measuring tube - has a signal frequency, which corresponds to a current resonance frequency of flexural vibrations of the measuring tube, particularly a current resonance frequency of a flexural vibration mode of the first order, wherein in said mode the at least one vibrating measuring tube performs flexural vibrations with precisely one antinode over a useful vibration length such that the at least one measuring tube, excited to vibrate, in the useful mode, by the at least one vibration exciter (41), performs, at least in part, flexural vibrations at a current resonance frequency.

4. Measuring system as claimed in the previous claim,

- wherein the signal frequency of the excitation signal (iexc) or of the useful signal component of the excitation signal (iexc) corresponds to a current resonance frequency of a flexural vibration mode of the first order in which the at least one vibrating measuring tube performs flexural vibrations with precisely one antinode over a useful vibration length, and
- wherein the first signal component of the vibration signal has a signal frequency, which is greater than the signal frequency of the excitation signal corresponding to the current resonance frequency of the flexural vibration mode of the first order.

5. Measuring system as claimed in one of the previous claims, wherein the first signal component of the vibration signal has a signal frequency which corresponds to a current resonance frequency of a natural flexural vibration mode inherent to the measuring tube, in which the measuring tube performs flexural vibrations with precisely one antinode more than in the case of flexural vibrations in the useful mode, particularly in a flexural vibration mode of the second order in which the at least one vibrating measuring tube performs flexural vibrations with precisely two antinodes over a useful vibration length and/or a Coriolis mode caused by Coriolis forces induced by fluid flowing through the vibrating measuring tube in the useful mode.

6. Measuring system as claimed in one of the previous claims,

- wherein the second signal component of the vibration signal represents a flexural vibration mode in which the at least one vibrating measuring tube performs flexural vibrations with at least three antinodes; and/or
- wherein the second signal component of the vibration signal has a signal frequency, which corresponds to a current resonance frequency of any flexural vibration mode of the third order in which the at least one vibrating measuring tube performs flexural vibrations with precisely two antinodes more than in the case of the flexural vibrations in the useful mode.

7. Measuring system as claimed in one of the previous claims,

- wherein the threshold value for the value of the signal voltage of the first signal component of the vibration signal is selected in such a way that it is greater than the value of the signal voltage of the second signal component of the vibration signal, particularly more than the double; and/or
- wherein the threshold value for the value of the signal voltage of the first signal component of the vibration signal and the threshold value for the value of the signal voltage of the second signal component of the vibration signal are selected in such a way that a threshold value ratio, defined by a ratio of the threshold value for the value of the signal voltage of the first signal component of the vibration signal to the threshold value for the value of the signal voltage of the second signal component of the vibration signal is greater than one, particularly greater than two.

8. Measuring system as claimed in one of the previous claims, wherein the transmitter electronics (ME) only generate the cavitation message when a signal voltage ratio, defined by a ratio of a value of a signal voltage of the first signal component of the vibration signal to a value of a signal voltage of the second signal component of the vibration signal, exceeds a threshold value predefined for said signal voltage ratio, particularly modifiable during operation and/or dependent on a current signal voltage of the first signal component of the vibration signal and/or dependent on a current signal voltage of the second signal component of the vibration signal.

9. Measuring system as claimed in the previous claim, wherein the threshold value for the signal voltage ratio is selected to be greater than one, particularly greater than two.

10. Measuring system as claimed in one of the previous claims, wherein the transmitter electronics (ME) generate the cavitation message also using a pressure measured value ($X_{p1}$), particularly one recorded in a volatile data memory provided in the transmitter electronics, said value representing a pressure, $p_{Ref}$, which is present in the flowing fluid, particularly upstream from an outlet end of the transducer and/or downstream from an inlet end of the transducer, measured particularly using a pressure sensor communicating with the transmitter electronics and/or determined using vibration signals of the transducer and/or set statically and/or by means of a pump.

11. Measuring system as claimed in one of the previous claims, which further comprises a pressure sensor, which communicates with the transmitter electronics during operation, said sensor being designed to measure a pressure $p_{Ref}$, particularly a static pressure, present particularly upstream from an inlet end of the transducer or downstream from an outlet end of the transducer in a pipe that conducts the fluid.

12. Measuring system as claimed in one of the Claims 2 to 11, wherein the transmitter electronics generate a pressure differential measured value ($X_{\Delta p}$) using the excitation signal and the vibration signal, said value representing a pressure differential that occurs between two predefined reference points in the flowing fluid, particularly in such a way that a first of the two reference points is located in the transducer on the inlet side and/or a second of the two reference points is located on the outlet side.

13. Measuring system as claimed in the previous claim,

- wherein the transmitter electronics generate the cavitation message using the pressure differential measured value; and/or
- wherein the transmitter electronics generate an alarm using the pressure differential measured value, said alarm signaling an overshooting of a predefined maximum permissible drop in a static pressure in the fluid flowing through the transducer, particularly in a manner which can be perceived visually and/or acoustically; and/or
- wherein the transmitter electronics generate an alarm using the pressure differential measured value, said alarm signaling an excessively high drop in pressure in the fluid, provoked by the transducer, particularly in a manner which can be perceived visually and/or acoustically; and/or
- wherein the transmitter electronics determine the pressure differential measured value using a Reynolds number measured value, particularly one saved in a volatile data memory provided in the transmitter electronics and/or generated by the excitation signal an/or by at least one vibration signal supplied by the transducer, said measured value representing a Reynolds number, Re, for fluid flowing through the transducer; and/or
- wherein the transmitter electronics generate the pressure differential measured value using a viscosity measured value ($X_\eta$), particularly one saved in a volatile data memory provided in the transmitter electronics and/or generated during operation using the excitation signal and/or using at least one of the vibration signals, said measured value representing a viscosity, $\eta$, of the fluid flowing through the transducer; and/or
- wherein in said measuring system the transmitter electronics generate a pressure loss coefficient ($X_\zeta$) for the purpose of determining the pressure differential measured value, said coefficient representing a pressure loss over the transducer, which depends on the current Reynolds number, Re, of the flowing fluid, in reference to a current kinetic energy of the fluid flowing through the transducer, particularly based on the following relationship:

$$X_\zeta = K_{\zeta,1} + K_{\zeta,2} \cdot X_{Re} \exp(K_{\zeta,3}),$$

where $K_{\zeta,1}$, $K_{\zeta,2}$, $K_{\zeta,3}$ are measuring system parameters recorded as fixed values in the transmitter electronics, particularly in a non-volatile data memory provided in the transmitter electronics, said values being determined experimentally in advance.

**Revendications**

1. Système de mesure destiné à des fluides en écoulement, notamment dans des conduites, lequel système de mesure comprend :

- un transducteur (MW) du type à vibration, parcouru en fonctionnement par un fluide, notamment un liquide ou une autre matière liquide avec une tendance à la cavitation, lequel transducteur est destiné à la génération de signaux de vibration correspondant avec des paramètres du fluide en écoulement, notamment un débit massique, une densité et/ou une viscosité, ainsi qu'une électronique de transmetteur (ME) couplée électriquement avec le transducteur, lequel transmetteur est destiné à exploiter les signaux de vibration délivrés par le transducteur,

- pour lequel le transducteur (MW) présente

-- au moins un tube de mesure (10, 10'), notamment en forme de V, en forme de U, en forme de Z ou droit, destiné au guidage du fluide en écoulement,
-- au moins un excitateur de vibrations (41) électromécanique, notamment électrodynamique, destiné à l'excitation en vibrations de flexion et/ou au maintien des vibrations de flexion de l'au moins un tube de mesure dans une mode utile, notamment de telle sorte que l'au moins un tube de mesure exécute sur une longueur de vibration utile au moins partiellement des vibrations de flexion avec un unique ventre de vibration et/ou des vibrations de flexion à une fréquence de résonance de vibrations de flexion momentanément minimale, inhérente au même tube de mesure, et/ou des vibrations de flexion dans un mode de vibrations de flexion naturel, inhérent au même tube de mesure, et
-- au moins un capteur de vibration (51), notamment électrodynamique, destiné à la mesure des vibrations, notamment côté entrée ou côté sortie, de l'au moins un tube de mesure, et destiné à la génération d'un signal de vibration (si) du transducteur représentant les vibrations, notamment côté entrée ou côté sortie, de l'au moins un tube de mesure ; et

- pour lequel l'électronique de transmetteur (ME) génère

-- à la fois au moyen d'une première composante de signal de l'au moins un signal de vibration généré par le capteur de vibration (51), laquelle composante représente un mode de vibrations de flexion dans lequel l'au moins un tube de mesure vibrant exécute des vibrations de flexion avec au moins un ventre de vibration de plus que pour les vibrations de flexion en mode utile, notamment des vibrations de flexion avec au moins deux ventres de vibration,
-- et à la fois au moyen d'une deuxième composante du signal de vibration, qui représente un mode de vibrations de flexion dans lequel l'au moins un tube de mesure vibrant exécute des vibrations de flexion avec au moins un ventre de vibration de plus que pour le mode de vibration de flexion représenté par la première composante de signal, notamment des vibrations de flexion avec au moins trois ventres de vibration,

- un message de cavitation ($X_{KV}$), notamment déclaré en tant qu'alarme, lequel message signale une apparition de cavitation dans le fluide, laquelle alarme est notamment perceptible de manière visuelle et/ou acoustique, **caractérisé**
**en ce que** l'électronique de transmetteur (ME) ne génère le message de cavitation que
- lorsqu'une valeur d'une tension de signal de la première composante du signal de vibration dépasse une valeur seuil (THR1) prédéfinie à cette fin, notamment mémorisée dans l'électronique de transmetteur et/ou modifiable en fonctionnement
-- et lorsqu'une valeur d'une tension de signal de la deuxième composante du signal de vibration ne dépasse pas une valeur seuil (THR2) prédéfinie à cette fin, notamment modifiable en fonctionnement et/ou dépendant d'une tension de signal momentanée de la première composante du signal de vibration.

2. Système de mesure selon la revendication précédente, pour lequel l'électronique de transmetteur (ME) délivre au moins un signal d'excitation ($i_{exc}$) provoquant des vibrations de flexion de l'au moins un tube de mesure pour l'au moins un excitateur de vibration (41).

3. Système de mesure selon la revendication précédente, pour lequel le signal d'excitation ($i_{exc}$) - cependant au moins une composante utile du même signal d'excitation ($i_{exc}$) dominante, générant les vibrations de flexion du tube de mesure, concernant une puissance de signal et/ou une tension de signal présente une fréquence de signal, qui correspond à une fréquence de résonance momentanée de vibrations de flexion du tube de mesure, notamment une fréquence de résonance momentanée d'un mode de vibration de flexion de premier ordre, mode dans lequel l'au moins un tube de mesure vibrant exécute sur une longueur de vibration utile des vibrations de flexion avec exactement un ventre de vibration, de telle sorte que l'au moins un tube de mesure, excité en vibration, en mode utile, par l'au moins un excitateur de vibration (41), exécute au moins partiellement des vibrations de flexion avec une fréquence de résonance momentanée.

**4.** Système de mesure selon la revendication précédente,

- pour lequel la fréquence du signal d'excitation (iexc) ou de la composante de signal utile du signal d'excitation (iexc) correspond à une fréquence de résonance momentanée d'un mode de vibration de flexion de premier ordre, dans lequel l'au moins un tube de mesure vibrant exécute sur une longueur de vibration utile des vibrations de flexion avec exactement un ventre de vibration, et
- pour lequel la première composante du signal de vibration présente une fréquence de signal, qui est supérieure à la fréquence du signal d'excitation correspondant à la fréquence de résonance momentanée du mode de vibration de flexion de premier ordre.

**5.** Système de mesure selon l'une des revendications précédentes, pour lequel la première composante du signal de vibration présente une fréquence de signal, qui correspond à une fréquence de résonance momentanée d'un mode de vibration de flexion naturel inhérent au tube de mesure, mode dans lequel le tube de mesure exécute des vibrations de flexion avec exactement un ventre de vibration de plus que pour les vibrations de flexion en mode utile, notamment d'un mode de vibration de flexion de second ordre, dans lequel l'au moins un tube de mesure vibrant exécute sur une longueur de vibration utile des vibrations de flexion avec exactement deux ventres de vibration et/ou un mode Coriolis excité suite à des forces de Coriolis induites par le fluide s'écoulant dans le tube de mesure vibrant dans le mode utile.

**6.** Système de mesure selon l'une des revendications précédentes,

- pour lequel la deuxième composante du signal de vibration représente un mode de vibration de flexion, dans lequel l'au moins un tube de mesure vibrant exécute des vibrations de flexion avec au moins trois ventres de vibration ; et/ou
- pour lequel la deuxième composante du signal de vibration présente une fréquence de signal, qui correspond à une fréquence de résonance momentanée d'un mode de vibration de flexion de troisième ordre, dans lequel l'au moins un tube de mesure vibrant exécute des vibrations de flexion avec exactement deux ventres de vibration de plus que pour les vibrations de flexion en mode utile.

**7.** Système de mesure selon l'une des revendications précédentes,

- pour lequel la valeur seuil pour le montant de la tension de signal de la première composante du signal de vibration est choisie de telle sorte à être supérieure à une valeur de la tension de signal de la deuxième composante du signal de vibration, notamment de plus du double ; et/ou
- pour lequel la valeur seuil pour la valeur de la tension de signal de la première composante du signal de vibration et la valeur seuil pour la valeur de la tension de signal de la deuxième composante du signal de vibration sont choisies de telle sorte qu'un rapport des valeurs seuils, défini par un rapport entre la valeur seuil pour la valeur de la tension de signal de la première composante du signal de vibration et la valeur seuil pour la valeur de la tension de signal de la deuxième composante du signal de vibration est supérieur à un, notamment supérieur à deux.

**8.** Système de mesure selon l'une des revendications précédentes, pour lequel l'électronique de transmetteur (ME) ne génère le message de cavitation que lorsqu'un rapport des signaux de signal, défini par un rapport entre une valeur d'une tension de signal de la première composante du signal de vibration et une valeur d'une tension de signal de la deuxième composante du signal de vibration, dépasse une valeur seuil prédéfinie pour le même rapport de tensions de signal, notamment modifiable en fonctionnement et/ou dépendant d'une tension de signal momentanée de la première composante du signal de vibration et/ou dépendant d'une tension de signal momentanée de la deuxième composante du signal de vibration.

**9.** Système de mesure selon la revendication précédente, pour lequel la valeur seuil pour le rapport des tensions de signal est choisi supérieur à un, notamment supérieur à deux.

**10.** Système de mesure selon l'une des revendications précédentes, pour lequel l'électronique de transmetteur (ME) génère le message de cavitation également en utilisant une valeur mesurée de pression ($X_{p1}$) enregistrée dans la mémoire de données volatile prévue dans l'électronique de transmetteur, laquelle valeur représente une pression, $p_{Ref}$, régnant dans le fluide en écoulement, notamment en amont d'une extrémité de sortie du transducteur et/ou en aval d'une extrémité d'entrée du transducteur, mesurée notamment au moyen d'un capteur de pression communiquant avec l'électronique de transmetteur et/ou déterminée au moyen des signaux de vibration du transducteur et/ou statique et/ou réglée au moyen d'une pompe.

**11.** Système de mesure selon l'une des revendications précédentes, comprenant en outre un capteur de pression communiquant en fonctionnement avec l'électronique de transmetteur, lequel capteur est destiné à mesurer une pression, $p_{Ref}$, notamment statique, régnant notamment en amont d'une extrémité d'entrée du transducteur ou en aval d'une extrémité de sortie du transducteur, dans une conduite guidant le fluide.

**12.** Système de mesure selon l'une des revendications 2 à 11, pour lequel l'électronique de transmetteur génère au moyen du signal d'excitation et au moyen du signal de vibration une valeur mesurée de différence de pression ($X_{\Delta p}$), qui représente une différence de pression régnant entre deux points de référence prédéfinis dans le fluide en écoulement, notamment de telle sorte qu'un premier des deux points de référence est localisé côté entrée et/ou un deuxième des deux points de référence est localisé côté sortie dans le transducteur.

**13.** Système de mesure selon la revendication précédente,

- pour lequel l'électronique de transmetteur génère le message de cavitation en utilisant la valeur mesurée de différence de pression ; et/ou
- pour lequel l'électronique de transmetteur génère une alarme en utilisant la valeur mesurée de différence de pression, laquelle alarme signale un dépassement d'une diminution maximale admissible, définie au préalable, d'une pression statique dans le fluide s'écoulant à travers le transducteur, laquelle alarme est notamment perceptible de manière visuelle et/ou acoustique ;
et/ou
- pour lequel l'électronique de transmetteur génère une alarme en utilisant la valeur mesurée de différence de pression, laquelle alarme signale une chute de pression excessive dans le fluide, provoquée à travers le transducteur, laquelle alarme est notamment perceptible de manière visuelle et/ou acoustique ; et/ou
- pour lequel l'électronique de transmetteur détermine la valeur mesurée de différence de pression en utilisant une valeur mesurée de nombre de Reynolds, notamment enregistrée dans une mémoire de données volatile prévue dans l'électronique de transmetteur et/ou générée au moyen du signal d'excitation et/ou au moyen de l'au moins un signal de vibration délivré par le transducteur, laquelle valeur mesurée représente un nombre de Reynolds, Re, pour le fluide s'écoulant dans le transducteur ; et/ou
- pour lequel l'électronique de transmetteur génère la valeur mesurée de différence de pression en utilisant une valeur mesurée de viscosité ($X_{\eta}$), notamment enregistrée dans une mémoire de données volatile prévue dans l'électronique de transmetteur et/ou générée en fonctionnement au moyen du signal d'excitation et/ou au moyen d'au moins l'un des signaux de vibration, laquelle valeur mesurée représente une viscosité, $\eta$, du fluide s'écoulant dans le transducteur ; et/ou
- système de mesure pour lequel l'électronique de transmetteur génère, en vue de la détermination de la valeur mesurée de différence de pression, un coefficient de chute de pression ($X_{\zeta}$), qui représente une chute de pression dépendant du nombre de Reynolds, Re, momentané du fluide s'écoulant à travers le transducteur, en référence à une énergie cinétique momentanée du fluide s'écoulant dans le transducteur, notamment sur la base de la relation suivante :

$$X_{\zeta} = K_{\zeta,1} + K_{\zeta,2} \cdot X_{Re} \exp(K_{\zeta,3}),$$

où $K_{\zeta,1}$, $K_{\zeta,2}$, $K_{\zeta,3}$, sont des paramètres du système de mesure enregistrés comme valeurs fixes notamment dans une mémoire de données non volatile, prévue dans l'électronique de transmetteur.

Fig. 1a

Fig. 1b

EP 2 606 319 B1

Fig. 2a                    Fig. 2b

EP 2 606 319 B1

Fig. 3

Fig. 4

EP 2 606 319 B1

Fig. 5

Fig. 6

Fig. 7

Fig. 8

Fig. 9

*Fig. 10*

*Fig. 11*

*Fig. 12*

Fig. 13

**IN DER BESCHREIBUNG AUFGEFÜHRTE DOKUMENTE**

**In der Beschreibung aufgeführte Patentdokumente**

- EP 317340 A
- JP 8136311 A
- JP 9015015 A
- US 20070119264 A
- US 20070119265 A
- US 20070151370 A
- US 20070151371 A
- US 20070186685 A
- US 20080034893 A
- US 20080141789 A
- US 4680974 A
- US 4738144 A
- US 4777833 A
- US 4801897 A
- US 4823614 A
- US 4879911 A
- US 5009109 A
- US 5024104 A
- US 5050439 A
- US 5291792 A
- US 5359881 A
- US 5398554 A
- US 5476013 A
- US 5531126 A
- US 5602345 A
- US 5691485 A
- US 5734112 A
- US 5796010 A
- US 5796011 A
- US 5796012 A
- US 5804741 A
- US 5861561 A
- US 5869770 A
- US 5945609 A
- US 5979246 A
- US 6047457 A
- US 6092429 A
- US 6073495 A
- US 6311136 A
- US 6223605 B
- US 6330832 B
- US 6397685 B

- US 6513393 B
- US 6557422 B
- US 6651513 B
- US 6666098 B
- US 6691583 B
- US 6840109 B
- US 6868740 B
- US 6883387 B
- US 7017424 B
- US 7040179 B
- US 7073396 B
- US 7077014 B
- US 7080564 B
- US 7134348 B
- US 7216550 B
- US 7299699 B
- US 7305892 B
- US 7360451 B
- US 7392709 B
- US 7406878 B
- WO 0014485 A
- WO 0102816 A
- WO 2004072588 A
- WO 2008013545 A
- WO 2008077574 A
- WO 9529386 A
- WO 9516897 A
- WO 9940394 A
- WO 2009089839 A
- US 6711958 B
- US 5349872 A
- US 6006609 A
- US 6920798 B
- US 5731527 A
- US 5705754 A
- US 6311136 B
- DE 102010000759
- DE 102010000760
- DE 102010000761
- US 5576500 A
- US 7284449 B
- US 6910366 B